(19)

Europäisches Patentamt
European Patent Office
Office européen des brevets

(11) **EP 4 322 636 A1**

(12) **EUROPEAN PATENT APPLICATION**
published in accordance with Art. 153(4) EPC

(43) Date of publication:
**14.02.2024 Bulletin 2024/07**

(21) Application number: **22784967.6**

(22) Date of filing: **06.04.2022**

(51) International Patent Classification (IPC):
**H04W 64/00** *(2009.01)* **H04W 8/24** *(2009.01)*
**H04L 5/00** *(2006.01)*

(52) Cooperative Patent Classification (CPC):
**H04L 5/00; H04W 8/24; H04W 64/00;** Y02D 30/70

(86) International application number:
**PCT/KR2022/004981**

(87) International publication number:
**WO 2022/216058 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 US 202163171562 P**

(71) Applicant: **LG Electronics Inc.**
**Yeongdeungpo-gu**
**Seoul 07336 (KR)**

(72) Inventors:
• **LEE, Jeongsu**
**Seoul 06772 (KR)**
• **KO, Hyunsoo**
**Seoul 06772 (KR)**
• **PARK, Haewook**
**Seoul 06772 (KR)**
• **KIM, Kijun**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR POSITIONING IN WIRELESS COMMUNICATION SYSTEM**

(57)     A method of a user equipment (UE) for transmitting information for a measurement of a positioning reference signal (PRS) in a wireless communication system is disclosed. The method comprises receiving configuration information related to a PRS from a location server, receiving the PRS from a base station, and transmitting information for a measurement of the PRS to the location server. The information for the measurement of the PRS includes information representing whether the UE is a reference UE.

【FIG. 18】

**Description**

[TECHNICAL FIELD]

The present disclosure relates to a method and device for positioning in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

As part of various methods to improve the positioning measurement results of the existing NR system, the introduction of the reference station technique used in the existing satellite system to improve timing measurement may be considered.

[DISCLOSURE]

[TECHNICAL PROBLEM]

A reference station is a technique used in satellite systems. In order to apply the reference station technique to an NR system composed of different entities from entities constituting the satellite system, a separate configuration or signaling procedure is required.

Accordingly, an object of the present disclosure is to provide a method of utilizing a reference UE to improve a result of positioning measurement.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

In one aspect of the present disclosure, a method of a user equipment (UE) for transmitting information for a measurement of a positioning reference signal (PRS) in a wireless communication system comprises receiving, from a location server, configuration information related to a positioning reference signal (PRS), receiving the PRS from a base station, and transmitting, to the location server, information for a measurement of the PRS.

The information for the measurement of the PRS includes information representing whether the UE is a reference UE.

Whether the UE is the reference UE may be determined based on condition information related to a determination of the reference UE.

The condition information related to the determination of the reference UE may include information for at least one of i) a maximum change amount of a received signal strength, ii) a maximum movement change amount, and/or iii) a specific time duration.

The specific time duration may be determined based on a reception time of the condition information related to the determination of the reference UE and a preset value.

The specific time duration may be determined based on a transmission time of the information for the measurement of the PRS and a previous transmission time of the information for the measurement of the PRS.

The specific time duration may be determined based on a reception time of a request message for the measurement of the PRS and a previous reception time of the request message for the measurement of the PRS.

Based on a change amount of the received signal strength during the specific time duration being lower than the maximum change amount of the received signal strength, the UE may be determined as the reference.

Based on a movement change amount of the UE during the specific time duration being lower than the maximum movement change amount, the UE may be determined as the reference UE.

The method may further comprise transmitting capability information representing whether the UE is able to operate as the reference UE.

The condition information related to the determination of the reference UE may be configured based on an RRC message, a medium access control-control element (MAC-CE), or an LTE Positioning Protocol (LPP) message.

Based on the UE being determined as the reference UE, the information for the measurement of the PRS may further include additional information related to at least one of a timing error related to the base station, a propagation time related to the base station, and/or a timing error group (TEG) related to the base station.

In another aspect of the present disclosure, a user equipment (UE) transmitting information for a measurement of a positioning reference signal (PRS) in a wireless communication system comprises one or more transceivers, one or more processors configured to control the one or more transceivers, and one or more memories operably connected to the one or more processors.

The one or more memories are configured to store instructions performing operations based on being executed by the one or more processors.

The operations comprise receiving, from a location server, configuration information related to a positioning reference signal (PRS), receiving the PRS from a base station, and transmitting, to the location server, information for a measurement of the PRS.

The information for the measurement of the PRS includes information representing whether the UE is a reference UE.

In another aspect of the present disclosure, a device controlling a user equipment (UE) to transmit information for a measurement of a positioning reference signal (PRS) in a wireless communication system comprises one or more processors, and one or more memories operably connected to the one or more processors.

The one or more memories are configured to store instructions performing operations based on being executed by the one or more processors.

The operations comprise receiving, from a location server, configuration information related to a positioning reference signal (PRS), receiving the PRS from a base station, and transmitting, to the location server, information for a measurement of the PRS.

The information for the measurement of the PRS includes information representing whether the UE is a reference UE.

In another aspect of the present disclosure, one or more non-transitory computer readable mediums store one or more instructions.

The one or more instructions perform operations based on being executed by one or more processors.

The operations comprise receiving, from a location server, configuration information related to a positioning reference signal (PRS), receiving the PRS from a base station, and transmitting, to the location server, information for a measurement of the PRS.

The information for the measurement of the PRS includes information representing whether a user equipment (UE) is a reference UE.

In another aspect of the present disclosure, a method of a location server for receiving information for a measurement of a positioning reference signal (PRS) in a wireless communication system comprises transmitting, to a user equipment (UE), configuration information related to the PRS, the PRS being transmitted from a base station to the UE, and receiving, from the UE, information for a measurement of the PRS.

The information for the measurement of the PRS includes information representing whether the UE is a reference UE.

In another aspect of the present disclosure, a location server receiving information for a measurement of a positioning reference signal (PRS) in a wireless communication system comprises one or more transceivers, one or more processors configured to control the one or more transceivers, and one or more memories operably connected to the one or more processors.

The one or more memories are configured to store instructions performing operations based on being executed by the one or more processors.

The operations comprise transmitting, to a user equipment (UE), configuration information related to the PRS, the PRS being transmitted from a base station to the UE, and receiving, from the UE, information for a measurement of the PRS.

The information for the measurement of the PRS includes information representing whether the UE is a reference UE.

[ADVANTAGEOUS EFFECTS]

According to embodiments of the present disclosure, information for measurement of PRS includes information representing whether a UE is a reference UE. That is, a measurement report of the reference UE can be reported to be distinguished from a measurement report of a normal UE among measurement reports of multiple UEs transmitted to a location server. Since error value(s) for improvement of timing measurement can be determined based on the measurement report of the reference UE, accuracy of position measurement (e.g., multi-RTT) using the timing measurement can be improved.

According to embodiments of the present disclosure, whether the UE is the reference UE is determined based on condition information related to determination of the reference UE. Thus, since a measurement report of a specific UE satisfying a predefined condition (e.g., a change amount of a received signal strength and/or a movement change amount) can be reported as the measurement report of the reference UE, accuracy and precision for the measurement report of the reference UE can be guaranteed.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BFIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.

FIG. 1 is a diagram illustrating an example of an overall system structure of NR to which a method proposed in the present disclosure is applicable.

FIG. 2 illustrates a relationship between an uplink frame and a downlink frame in a wireless communication system to which a method proposed by the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates examples of a resource grid for each antenna port and numerology to which a method proposed in the present disclosure is applicable.

FIG. 6 illustrates physical channels and general signal transmission used in a 3GPP system.

FIG. 7 is a diagram illustrating an example of a positioning protocol configuration for measuring a location of a user equipment (UE).

FIG. 8 is a diagram illustrating an example of architecture of a system for measuring a location of an UE.

FIG. 9 is a diagram illustrating an example of a procedure for measuring a location of a UE.

FIG. 10 is a diagram illustrating an example of a protocol layer for supporting LPP message transmission.

FIG. 11 is a diagram illustrating an example of a protocol layer for supporting NRPPa transmission.

FIG. 12 is a diagram illustrating an example of an OTDOA positioning measurement method.

FIGS. 13a and 13b are diagrams illustrating an example of a Multi RTT positioning measurement method.

FIG. 14 illustrates an example of RTT considering a timing error at a UE and a TRP where the same propagation time of UL and DL is assumed.

FIG. 15 illustrates timing measurement using different Rx/Tx TEGs at a UE and a TRP.

FIG. 16 is a diagram illustrating operations of a UE, TRP, and LMF to which a method proposed in the present disclosure can be applied.

FIG. 17 is a flowchart for explaining an operation of each UE, TRP and LMF to which a method proposed in the present disclosure can be applied.

FIG. 18 is a flow chart illustrating a method for a UE to transmit information on a measurement of PRS in a wireless communication system according to an embodiment of the present disclosure.

FIG. 19 is a flow chart illustrating a method for a location server to receive information on a measurement of PRS in a wireless communication system according to another embodiment of the present disclosure.

FIG. 20 illustrates a communication system 1 applied to the present disclosure.

FIG. 21 illustrates wireless devices applicable to the present disclosure.

FIG. 22 illustrates a signal process circuit for a transmission signal.

FIG. 23 illustrates another example of a wireless device applied to the present disclosure.

FIG. 24 illustrates a hand-held device applied to the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.

3GPP LTE

36.211: Physical channels and modulation
36.212: Multiplexing and channel coding
36.213: Physical layer procedures
36.300: Overall description
36.331: Radio Resource Control (RRC)
3GPP NR
38.211: Physical channels and modulation
38.212: Multiplexing and channel coding
38.213: Physical layer procedures for control
38.214: Physical layer procedures for data
38.300: NR and NG-RAN Overall Description
36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/LTE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies may be defined.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

Overview of system

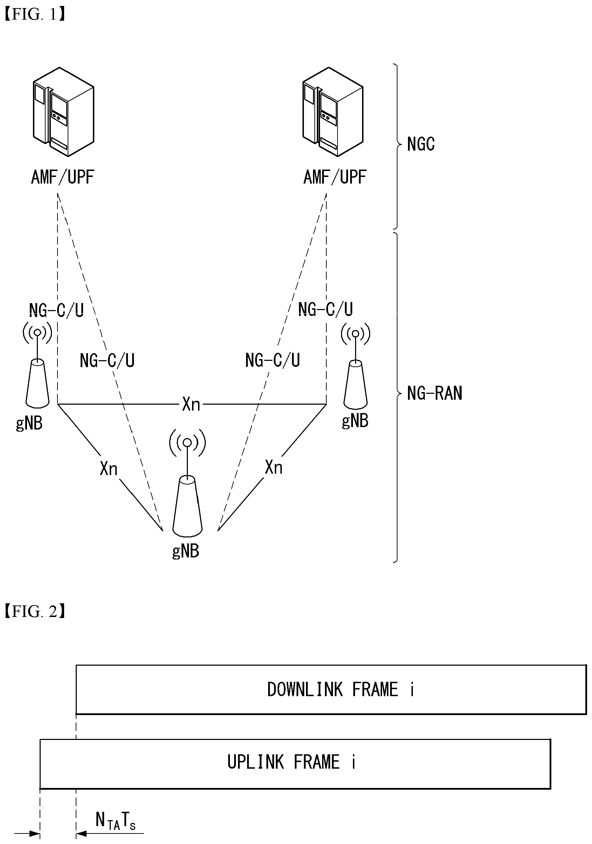

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |

(continued)

| $\mu$ | $\Delta f = 2^{\mu} \cdot 15[kHz]$ | Cyclic prefix |
|---|---|---|
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10^3$ and $N_f = 4096$. Downlink and uplink transmissions is constituted of a radio frame with a period of $T_f = (\Delta f_{max} N_f / 100) \cdot T_s = 10$ ms. Here, the radio frame is constituted of 10 subframes each of which has a period of $T_{sf} = (\Delta f_{max} N_f / 1000) \cdot T_s = 1$ ms. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin $T_{TA} = N_{TA} T_s$ earlier than the start of the downlink frame by the UE.

For numerology $\mu$, slots are numbered in ascending order of $n_s^{\mu} \in \left\{ 0, ..., N_{subframe}^{slots, \mu} - 1 \right\}$ in the subframe and in ascending order of $n_{s,f}^{\mu} \in \left\{ 0, ..., N_{frame}^{slots, \mu} - 1 \right\}$ in the radio frame. One slot includes consecutive OFDM symbols of $N_{symb}^{\mu}$, and $N_{symb}^{\mu}$ is determined according to the used numerology and slot configuration. In the subframe, the start of slot $n_s^{\mu}$ is temporally aligned with the start of $n_s^{\mu} N_{symb}^{\mu}$.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

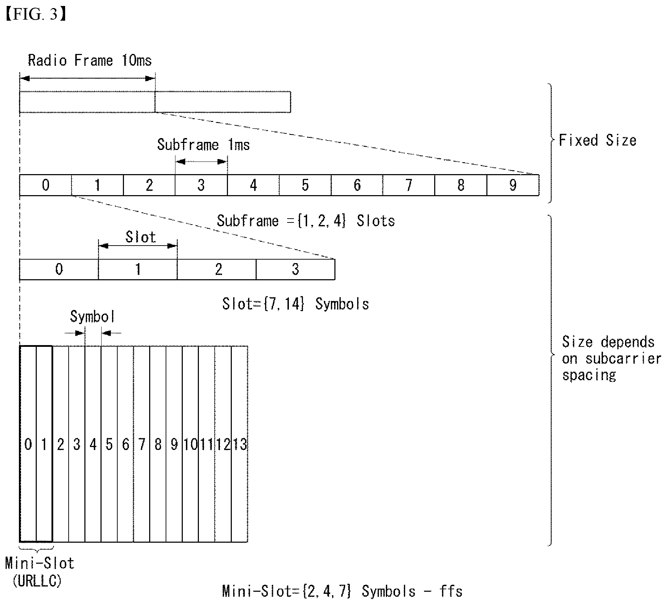

FIG. 3 illustrates an example of a frame structure in a NR system. FIG. 3 is merely for convenience of explanation and does not limit the scope of the present disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

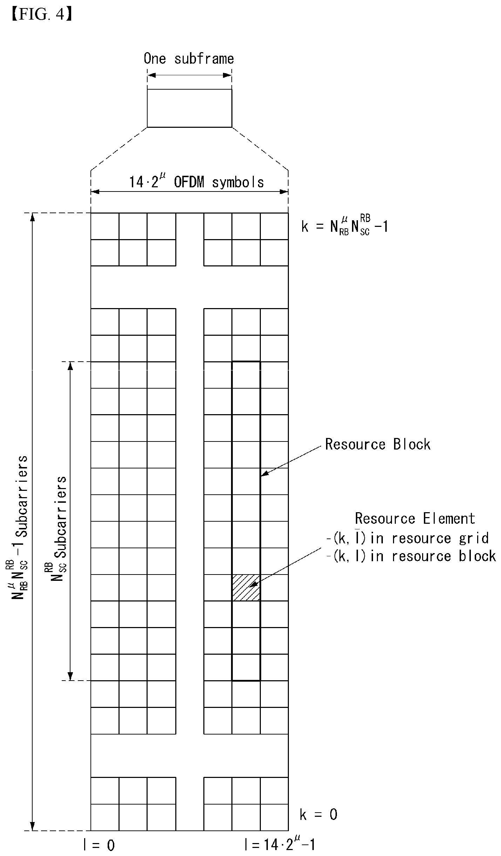

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14\cdot2^{\mu}$ OFDM symbols, but the present disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

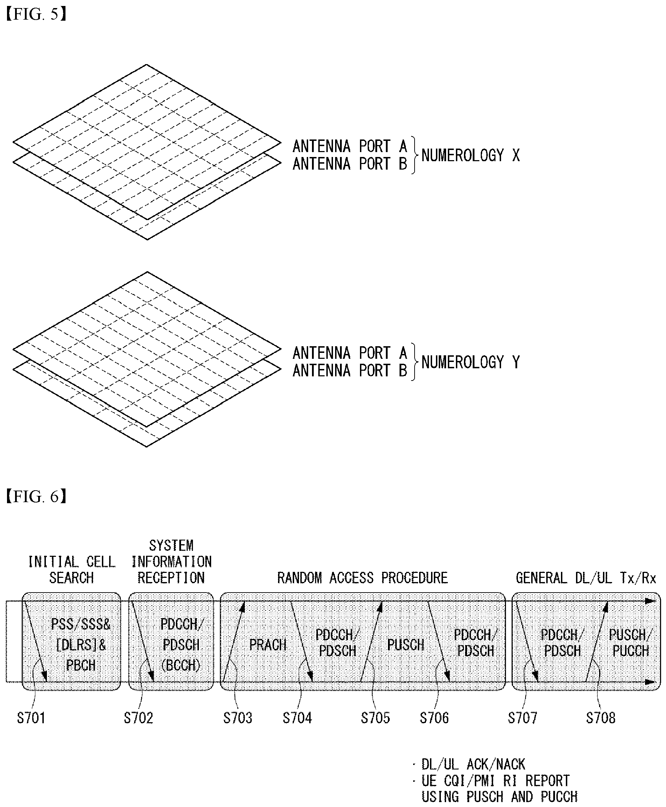

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair ($k,\bar{l}$), where $k = 0,..., N_{\text{RB}}^{\mu} N_{\text{sc}}^{\text{RB}} - 1$ is an index on a frequency domain, and $\bar{l} = 0,...,2^{\mu} N_{\text{symb}}^{(\mu)} - 1$ refers to a location of a symbol in a subframe. The index pair ($k,\bar{l}$) is used to refer to a resource element in a slot, where $l = 0,...,N_{\text{symb}}^{\mu} - 1$.

The resource element ($k,\bar{l}$) for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{CRB}^{\mu}$ in the frequency domain and resource elements (k, l) for the subcarrier spacing configuration $\mu$ may be given by the following Equation 1.

【Equation 1】

$$n_{CRB}^{\mu} = \left\lfloor \frac{k}{N_{sc}^{RB}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{BWP,i}^{size} - 1$, where $i$ is No. Of the BWP. A relation between the physical resource block $n_{PRB}$ in BWP $i$ and the common resource block $n_{CRB}$ may be given by the following Equation 2.

【Equation 2】

$$n_{CRB} = n_{PRB} + N_{BWP,i}^{start}$$

Here, $N_{BWP,i}^{start}$ may be the common resource block where the BWP starts relative to the common resource block 0.

Physical Channel and General Signal Transmission

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Operation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

Downlink Beam Management (DL BM)

The DL BM procedure may include (1) transmission of beamformed DL reference signals (RSs) (e.g., CIS-RS or SS Block (SSB)) of the eNB and (2) beam reporting of the UE.

Here, the beam reporting a preferred DL RS identifier (ID)(s) and L1-Reference Signal Received Power (RSRP).

The DL RS ID may be an SSB Resource Indicator (SSBRI) or a CSI-RS Resource Indicator (CRI).

Hereinafter, matters related to the definition of TRP mentioned in the present specification will be described in detail.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

Hereinafter, matters related to positioning in a wireless communication system will be described in detail.

Table 5 below shows definitions of terms used in relation to the positioning.

[Table 5]

| Anchor carrier: In NB-IoT, a carrier where the UE assumes that NPSS/NSSS/NPBCH/SIB-NB are transmitted. |
| --- |

(continued)

**Location Server:** a physical or logical entity (e.g., E-SMLC or SUPL SLP) that manages positioning for a target device by obtaining measurements and other location information from one or more positioning units and providing assistance data to positioning units to help determine this. A Location Server may also compute or verify the final location estimate.

**E-SMLC:** Evolved Serving Mobile Location Center

**SLP:** SUPL Location Platform

**SUPL:** Secure User Plane Location

**NB-IoT:** NB-IoT allows access to network services via E-UTRA with a channel bandwidth limited to 200 kHz.

**Reference Source:** a physical entity or part of a physical entity that provides signals (e.g., RF, acoustic, infrared) that can be measured (e.g., by a Target Device) in order to obtain the location of a Target Device.

**Target Device:** the device that is being positioned (e.g., UE or SUPL SET).

**Transmission Point (TP):** A set of geographically co-located transmit antennas for one cell, part of one cell or one PRS-only TP. Transmission Points can include base station (ng-eNB or gNB) antennas, remote radio heads, a remote antenna of a base station, an antenna of a PRS-only TP, etc. One cell can be formed by one or multiple transmission points. For a homogeneous deployment, each transmission point may correspond to one cell.

**Observed Time Difference Of Arrival (OTDOA):** The time interval that is observed by a target device between the reception of downlink signals from two different TPs. If a signal from TP 1 is received at the moment $t_1$, and a signal from TP 2 is received at the moment $t_2$, the OTDOA is $t_2 - t_1$.

**PRS-only TP:** A TP which only transmits PRS signals for PRS-based TBS positioning and is not associated with a cell.

expected RSTD (from 36.355):

**1) If PRS is transmitted:**

This field indicates the RSTD value that the target device is expected to measure between this cell and the assistance data reference cell. The expectedRSTD field takes into account the expected propagation time difference as well as transmit time difference of PRS positioning occasions between the two cells. The RSTD value can be negative and is calculated as (expectedRSTD-8192). The resolution is $3 \times T_s$, with $T_s = 1/(15000*2048)$ seconds.

**2) If PRS is not transmitted:**

This field indicates the RSTD value that the target device is expected to measure between this cell and the assistance data reference cell. The expectedRSTD field takes into account the expected propagation time difference as well as transmit time difference between the two cells. The RSTD value can be negative and is calculated as (expectedRSTD-8192). The resolution is $3 \times T_s$, with $T_s = 1/(15000*2048)$ seconds.

expectedRSTD-Uncertainty (from 36.355):

**1) If PRS is transmitted:**

This field indicates the uncertainty in *expectedRSTD* value. The uncertainty is related to the location server's a-priori estimation of the target device location. The *expectedRSTD* and *expectedRSTD-Uncertainty* together define the search window for the target device.

The scale factor of the *expectedRSTD-Uncertainty* field is $3 \times T_s$, with $T_s = 1/(15000*2048)$ seconds.

The target device may assume that the beginning of the PRS occasion group of the PRS configuration with the longest PRS occasion group periodicity (NOTE) of the neighbour cell is received within the search window of size [- *expectedRSTD-Uncertainty* $\times 3 \times T_s$, *expectedRSTD-Uncertainty* $\times 3 \times T_s$] centered at $T_{REF}$ + 1 millisecond $\times N$ + (*expectedRSTD* $\square$ 8192) $\times 3 \times T_s$, where $T_{REF}$ is the reception time of the beginning of the first PRS occasion group of the first PRS configuration of the assistance data reference cell at the target device antenna connector, N = 0 when the EARFCN of the neighbour cell is equal to that of the assistance data reference cell, and N = *prs-SubframeOffset* otherwise.

**2) If PRS is not transmitted:**

This field indicates the uncertainty in *expectedRSTD* value. The uncertainty is related to the location server's a-priori estimation of the target device location. The *expectedRSTD* and *expectedRSTD-Uncertainty* together define the search window for the target device. The scale factor of the *expectedRSTD-Uncertainty* field is $3 \times T_s$, with $T_s = 1/(15000*2048)$ seconds.

(continued)

If $T_x$ is the reception time of the beginning of the subframe X of the assistance data reference cell at the target device antenna connector, the target device may assume that the beginning of the closest subframe of this neighbour cell to subframe X is received within the search window of size [-*expectedRSTD-Uncertainty*$\times 3 \times T_s$, *expectedRSTD-Uncertainty*$\times 3 \times T_s$] centered at $T_x$ + (*expectedRSTD*-8192) $\times 3 \times T_s$,

The following shows definitions of abbreviations used in relation to the above positioning.

5GS: 5G System
AoA: Angle of Arrival
AP: Access Point
BDS: BeiDou Navigation Satellite System
BSSID: Basic Service Set Identifier
CID: Cell-ID (positioning method)
E-SMLC: Enhanced Serving Mobile Location Centre
E-CID: Enhanced Cell-ID (positioning method)
ECEF: Earth-Centered, Earth-Fixed
ECI: Earth-Centered-Inertial
EGNOS: European Geostationary Navigation Overlay Service
E-UTRAN: Evolved Universal Terrestrial Radio Access Network
GAGAN: GPS Aided Geo Augmented Navigation
GLONASS: GLObal'naya NAvigatsionnaya Sputnikovaya Sistema (Engl.: Global Navigation Satellite System)
GMLC: Gateway Mobile Location Center
GNSS: Global Navigation Satellite System
GPS: Global Positioning System
HESSID: Homogeneous Extended Service Set Identifier
LCS: LoCation Services
LMF: Location Management Function
LPP: LTE Positioning Protocol
MBS: Metropolitan Beacon System
MO-LR: Mobile Originated Location Request
MT-LR: Mobile Terminated Location Request
NG-C: NG Control plane
NG-AP: NG Application Protocol
NI-LR: Network Induced Location Request
NRPPa: NR Positioning Protocol A
OTDOA: Observed Time Difference Of Arrival
PDU: Protocol Data Unit
PRS: Positioning Reference Signal
QZSS: Quasi-Zenith Satellite System
RRM: Radio Resource Management
RSSI: Received Signal Strength Indicator
RSTD: Reference Signal Time Difference / Relative Signal Time Difference
SBAS: Space Based Augmentation System
SET: SUPL Enabled Terminal
SLP: SUPL Location Platform
SSID: Service Set Identifier
SUPL: Secure User Plane Location
TADV: Timing Advance
TBS: Terrestrial Beacon System
TOA: Time of Arrival
TP: Transmission Point (TRP : Transmission and Reception Point)
UE: User Equipment
WAAS: Wide Area Augmentation System
WGS-84: World Geodetic System 1984
WLAN: Wireless Local Area Network

Positioning

Positioning may mean determining the geographic location and / or speed of the UE by measuring a radio signal. The location information may be requested by a client (e.g. an application) related to the UE and reported to the client. In addition, the location information may be included in a core network or may be requested by a client connected to the core network. The location information may be reported in a standard format such as cell-based or geographic coordinates, and in this case, the estimation error values for the location(position) and speed of the UE and/or the positioning measurement method used for positioning may be reported together.

Positioning Protocol configuration

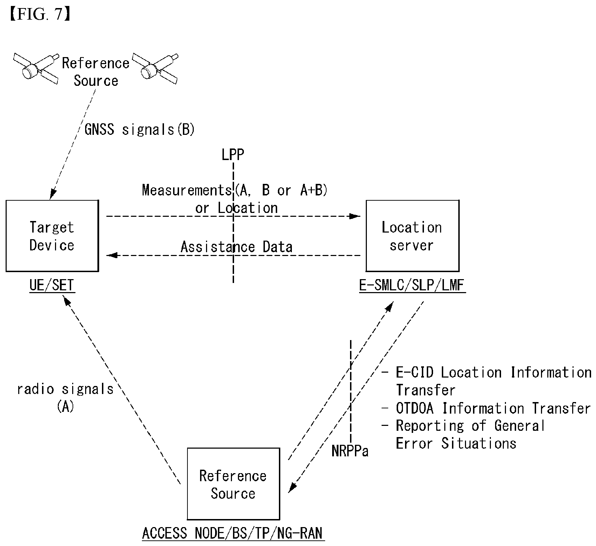

FIG. 7 is a diagram illustrating an example of a positioning protocol configuration for measuring a location of a user equipment (UE).
Referring to FIG. 7, LPP may be used as a point-to-point between a location server (E-SMLC and/or SLP and/or LMF) and a target device to position the target device (UE and/or SET) based on position-related measurements obtained from one or more reference sources. The target device and the location server may exchange measurement and/or location information based on signal A and/or signal B through the LPP.
NRPPa may be used to exchange information between the reference source (ACCESS NODE and/or BS and/or TP and/or NG-RAN nodes) and the location server.
Functions provided by the NRPPa protocol may include the following.

- E-CID Location Information Transfer: Through this function, location information may be exchanged between the reference source and the LMF for E-CID positioning purposes.
- OTDOA Information Transfer: Through this function, information may be exchanged between the reference source and the LMF for OTDOA positioning purposes.
- Reporting of General Error Situations: Through this function, a general error situation in which an error message for each function is not defined may be reported.

PRS mapping

For positioning, a positioning reference signal (PRS) may be used. The PRS is a reference signal used for position estimation of the UE.
PRS mapping in a wireless communication system to which embodiments are applicable in the present disclosure may be performed based on Table 6 below.

【Table 6】

7.2     Physical resources

The following antenna ports are defined for the downlink:

-        Antenna ports starting with 5000 for positioning reference signals

The UE shall not assume that two antenna ports are quasi co-located with respect to any QCL type unless specified otherwise.

7.4.1.7   Positioning reference signals

7.4.1.7.1 General

A positioning frequency layer consists of one or more downlink PRS resource sets, each of which consists of one or more downlink PRS resources as described in [6, TS 38.214].

7.4.1.7.2 Sequence generation

The UE shall assume the reference-signal sequence $r(m)$ is defined by

$$r(m) = \frac{1}{\sqrt{2}}(1 - 2c(m)) + j\frac{1}{\sqrt{2}}(1 - 2c(m + 1))$$

where the pseudo-random sequence $c(i)$ is defined in clause 5.2.1. The pseudo-random sequence generator shall be initialised with

$$c_{\text{init}} = \left(2^{22}\left\lceil\frac{n_{\text{ID,seq}}^{\text{PRS}}}{1024}\right\rceil + 2^{10}(N_{\text{symb}}^{\text{slot}}n_{\text{s,f}}^{\mu} + l + 1)(2(n_{\text{ID,seq}}^{\text{PRS}} \bmod 1024) + 1) + (n_{\text{ID,seq}}^{\text{PRS}} \bmod 1024)\right) \bmod 2^{31}$$

where $n_{\text{s,f}}^{\mu}$ is the slot number, the downlink PRS sequence ID $n_{\text{ID,seq}}^{\text{PRS}} \in \{0,1,\dots,4095\}$ is given by the higher-layer parameter DL-PRS-SequenceId, and $l$ is the OFDM symbol within the slot to which the sequence is mapped.

7.4.1.7.3 Mapping to physical resources in a downlink PRS resource

For each downlink PRS resource configured, the UE shall assume the sequence $r(m)$ is scaled with a factor $\beta_{\text{PRS}}$ and mapped to resources elements $(k, l)_{p,\mu}$ according to

$$a_{k,l}^{(p,\mu)} = \beta_{\text{PRS}}\, r(m)$$
$$m = 0, 1, \dots$$
$$k = mK_{\text{comb}}^{\text{PRS}} + \left((k_{\text{offset}}^{\text{PRS}} + k') \bmod K_{\text{comb}}^{\text{PRS}}\right)$$
$$l = l_{\text{start}}^{\text{PRS}}, l_{\text{start}}^{\text{PRS}} + 1, \dots, l_{\text{start}}^{\text{PRS}} + L_{\text{PRS}} - 1$$

when the following conditions are fulfilled:

-        the resource element $(k, l)_{p,\mu}$ is within the resource blocks occupied by the downlink PRS resource for which the UE is configured;

-        the symbol $l$ is not used by any SS/PBCH block used by the serving cell for downlink PRS transmitted from the serving cell or indicated by the higher-layer parameter SSB-positionInBurst for downlink PRS transmitted from a non-serving cell;

-        the slot number satisfies the conditions in clause 7.4.1.7.4. [TS 38.211]

and where

-        $l_{\text{start}}^{\text{PRS}}$ is the first symbol of the downlink PRS within a slot and given by the higher-layer parameter DL-PRS-ResourceSymbolOffset;

-        the size of the downlink PRS resource in the time domain $L_{\text{PRS}} \in \{2,4,6,12\}$ is given by the higher-layer parameter DL-PRS-NumSymbols;

-        the comb size $K_{\text{comb}}^{\text{PRS}} \in \{2,4,6,12\}$ is given by the higher-layer parameter transmissionComb;

-        the resource-element offset $k_{\text{offset}}^{\text{PRS}} \in \{0,1,\dots,K_{\text{comb}}^{\text{PRS}} - 1\}$ is given by the higher-layer parameter combOffset;

-        the quantity $k'$ is given by Table 7.4.1.7.3-1.

The reference point for $k = 0$ is the location of the point A of the positioning frequency layer, in which

the downlink PRS resource is configured where point A is given by the higher-layer parameter DL-PRS-PointA.

Table 7.4.1.7.3-1: The frequency offset $k'$ as a function of $l - l_{start}^{PRS}$.

| $K_{comb}^{PRS}$ | Symbol number within the downlink PRS resource $l - l_{start}^{PRS}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

### 7.4.1.7.4 Mapping to slots in a downlink PRS resource set

For a downlink PRS resource in a downlink PRS resource set, the UE shall assume the downlink PRS resource being transmitted when the slot and frame numbers fulfil

$$\left(N_{slot}^{frame,\mu} n_f + n_{s,f}^{\mu} - T_{offset}^{PRS} - T_{offset,res}^{PRS}\right) \bmod 2^\mu T_{per}^{PRS} \in \left\{ i T_{gap}^{PRS} \right\}_{i=0}^{T_{rep}^{PRS}-1}$$

and one of the following conditions are fulfilled:

- the higher-layer parameter DL-PRS-MutingPattern is not provided;
- the higher-layer parameter DL-PRS-MutingPattern is provided and bitmap $\{b^1\}$ but not bitmap $\{b^2\}$ is provided, and bit $b_i^1$ is set;
- the higher-layer parameter DL-PRS-MutingPattern is provided and bitmap $\{b^2\}$ but not bitmap $\{b^1\}$ is provided, and bit $b_i^2$ is set;
- the higher-layer parameter DL-PRS-MutingPattern is provided and both bitmaps $\{b^1\}$ and $\{b^2\}$ are provided, and both bit $b_i^1$ and $b_i^2$ are set.

where

- $b_i^1$ is bit $i = \left\lfloor \left(N_{slot}^{frame,\mu} n_f + n_{s,f}^{\mu} - T_{offset}^{PRS} - T_{offset,res}^{PRS}\right) \Big/ \left(2^\mu T_{muting}^{PRS} T_{per}^{PRS}\right) \right\rfloor \bmod L$ in the bitmap given by the higher-layer parameter DL-PRS-MutingPattern where $L \in \{2,4,8,16,32\}$ is the size of the bitmap;
- $b_i^2$ is bit $i = \left\lfloor \left(\left(N_{slot}^{frame,\mu} n_f + n_{s,f}^{\mu} - T_{offset}^{PRS} - T_{offset,res}^{PRS}\right) \bmod 2^\mu T_{per}^{PRS}\right) \Big/ T_{gap}^{PRS} \right\rfloor \bmod T_{rep}^{PRS}$ in the bitmap given by the higher-layer parameter DL-PRS-MutingPattern;
- the slot offset $T_{offset}^{PRS} \in \{0,1,\dots,T_{per}^{PRS}-1\}$ is given by the higher-layer parameter DL-PRS-ResourceSetSlotOffset;
- the downlink PRS resource slot offset $T_{offset,res}^{PRS}$ is given by the higher-layer parameter DL-PRS-ResourceSlotOffset;
- the periodicity $T_{per}^{PRS} \in \{4,5,8,10,16,20,32,40,64,80,160,320,640,1280,2560,5120,10240\}$ is given by the higher-layer parameter DL-PRS-Periodicity;
- the repetition factor $T_{rep}^{PRS} \in \{1,2,4,6,8,16,32\}$ is given by the higher-layer parameter DL-PRS-ResourceRepetitionFactor;
- the muting repetition factor $T_{muting}^{PRS}$ is given by the higher-layer parameter DL-PRS-MutingBitRepetitionFactor;
- the time gap $T_{gap}^{PRS} \in \{1,2,4,8,16,32\}$ is given by the higher-layer parameter DL-PRS-ResourceTimeGap;

For a downlink PRS resource in a downlink PRS resource set configured, the UE shall assume the downlink PRS resource being transmitted as described in clause 5.1.6.4 of [6, TS 38.214].

PRS reception procedure

The PRS reception procedure of the UE in a wireless communication system to which embodiments are applicable in the present disclosure may be performed based on Table 7 below.

[Table 7]

| 5.1.6.5 PRS reception procedure |
|---|

(continued)

The UE can be configured with one or more DL PRS resource set configuration(s) as indicated by the higher layer parameters DL-PRS-ResourceSet and DL-PRS-Resource. Each DL PRS resource set consists of K$\geq$1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS positioning Frequency Layer id defined as a collection of DL PRS Resource Sets which have common parameters configured by DL-PRS-PositioningFrequencyLayer.

The UE assumes that the following parameters for each DL PRS resource(s) are configured via higher layer parameters DL-PRS-positioningFrequencyLayer, DL-PRSResouceceSet and DL-PRS-Resource.

A positioning frequency layer consists of one or more PRS resource sets and it is defined by:

- DL-PRS-SubcarrierSpacing defines the subcarrier spacing for the DL PRS resurce. All DL PRS Resoiurces and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211].

- DL-PRS-CyclicPrefix defines the cyclic prefix for the DL PRS resource. All DL PRS Resources and DL PRS Resiurce stes in the same DL-PRS-PositioningFrequencyLayer have the same value of DL-PRS-CyclicPrefix. The supportes values of DL-PRS-CyclicPrefix are given in Table 4.2-1 of [4, TS38.211].

- DL-PRS-Point A defines the absolue frequency o the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A.

The UE expects that it will be configured with [IDs] each of which is defined such that it is assocaited with multiple DL PRS Resource Sets from the same cell. The UE expects that one of these [IDs] along with a DL-PRS-ResourceSetsId and DL-PRS-ResourceId can be used to uniquely identify a DL PRS Resource

A PRS resource set consists of one or more PRS resources ans it is defined by:

- DL-PRS-ResourceSetId defines the identify of the DL PRS resource set configuration.

- DL-PRS-Periodicity defines the DL PRS resource periodicity and takes values

$$T_{\text{per}}^{\text{PRS}} \in 2^{\mu}\{4, 8, 16, 32, 64, 5, 10, 20, 40, 80, 160, 320, 640, 1280, 2560, 5120, 10240, 20480\}$$ slots, where $\mu$=0,1,2,3 for DL-PRS-SubcarrierSpacing=15, 30, 60 and 120kHz respectively. $T_{\text{per}}^{\text{PRS}} = 2^{\mu} \cdot 20480$ is not supported for $\mu$ = 0. All the DL PRS resources within one resource set are configures with the same periodicity.

- DL-PRSResourceRepetitionFactor defines how many times each DL-PRS resource is repeated for a single instance of the DL-PRS resource set and takes values $T_{\text{rep}}^{\text{PRS}} \in \{1,2,4,6,8,16,32\}$ ,. All the DL PRS resources within one resource set have the same ResourceRepetitionFactor

-DM-PRS-ResourceTimeGap defines the offset in number of slots between two repeated instances of a DL PRS resource with the same DL-PRS-ResourceID within a single instance of the DL PRS resource set and takes value $T_{\text{gap}}^{\text{PRS}} \in \{1,2,4,8,16,32\}$. The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap

- DL-PRS-MutingPattern defines a bitmap of the time locations where the DL PRS resource is expected to not be transmitted for a DM PRS resource set. The bitmap size can be {2, 4, 8, 16, 32} bits long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

- DL-PRS-SFN0-Offset defines the time offset of the SFN0 slot 0 for the transmitting cell with respect to SFN0 slot 0 of [FFS in RAN2].

- DL-PRS-ResourceSetSlotOffset defines the slot offset with respect to SFN0 slot 0 and takes values $$T_{\text{offset}}^{\text{PRS}} \in \{0,1, \dots, T_{\text{per}}^{\text{PRS}} - 1\}.$$

(continued)

- DL-PRS-CombSizeN defines the comb size of a DL PRS resource where the allowable values are given in Clause 7.4.1.7.1 of [TS38.211]. All DL PRS resource sets belonging to the same positioning frequency layer have the same value of DL-PRS-combSizeN.

- DL-PRS-ResourceBandwidth defines the number of resource blocks configured for PRS transmission. The parameter has a granularity of 4 PRBs with a minimum of 24 PRBs and a maximum of 272 PRBs. All DL PRS resources sets within a positioning frequency layer have the same value of DL-PRS-ResourceBandwidth.

A PRS resource is defined by:

- DL-PRS-ResourceList determines the DL PRS resources that are contained within one DL PRS resource set.

- DL-PRS-ResourceId determines the DL PRS resource configuration identity. All DL PRS resource IDs are locally defined within a DL PRS resource set.

- DL-PRS-SequenceId is used to initialize cinit value used in pseudo random generator [4, TS38.211, 7.4.1.7.2] for generation of DL PRS sequence for a given DL PRS resource.

- DL-PRS-ReOffset defines the starting RE offset of the first symbol within a DL PRS resource in frequency. The relative RE offsets of the remaining symbols within a DL PRS resource are defined based on the initial offset and the rule described in Clause 7.4.1.7.3 of [4, TS38.211].

- DL-PRS-ResourceSlotOffset determines the starting slot of the DL PRS resource with respect to corresponding DL-PRS-ResourceSetSlotOffset

- DL-PRS-ResourceSymbolOffset determines the starting symbol of the DL PRS resource within the starting slot.

- DL-PRS-NumSymbols defines the number of symbols of the DL PRS resource within a slot where the allowable values are given in Clause 7.4.1.7.1 of [4, TS38.211].

- DL-PRS-QCL-Info defines any quasi-colocation information of the DL PRS resource with other reference signals. The DL PRS may be configured to be 'QCL-Type-D' with a DL PRS or SS/PBCH Block from a serving cell or a non-serving cell. The DL PRS may be configured to be 'QCL-Type-C' with a SS/PBCH Block from a serving or non-serving cell. If the DL PRS is configured as both 'QCL-Type-C' and 'QCL-Type-D' with a SS/PBCH Block then the SSB index indicated should be the same.

- DL-PRS-StartPRB defines the starting PRB index of the DL PRS resource with respect to reference Point A. The starting PRB index has a granularity of one PRB with a minimum value of 0 and a maximum value of 2176 PRBs. All DL PRS Resource Sets belonging to the same Positioning Frequency Layer have the same value of Start PRB.

The UE assumes constant EPRE is used for all REs of a given DL PRS resource.

The UE may be indicated by the network that a DL PRS resources can be used as the reference for the RSTD measurement in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the

reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference.

The UE may be configured to report quality metrics corresponding to the RSTD and UE Rx-Tx time difference measurements which include the following fields:

- TimingMeasQuality-Value which provides the best estimate of the uncertainty of the measurement

- TimingMeasQuality-Resolution which specifies the resolution levels used in the Value field The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expected RSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP.

(continued)

The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers. For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell.

The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

The UE may be configured to measure and report up to 8 DL PRS RSRP measurements on different DL PRS resources from the same cell. When the UE reports DL PRS RSRP measurements from one

DL PRS resource set, the UE may indicate which DL PRS RSRP measurements have been performed using the same spatial domain filter for reception.

If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResourceId of the source DL-PRS-Resource are expected to be indicated to the UE.

The UE does not expect to process the DL PRS in the same symbol where other DL signals and channels are transmitted to the UE when there is no measurement gap configured to the UE.

Positioning architecture

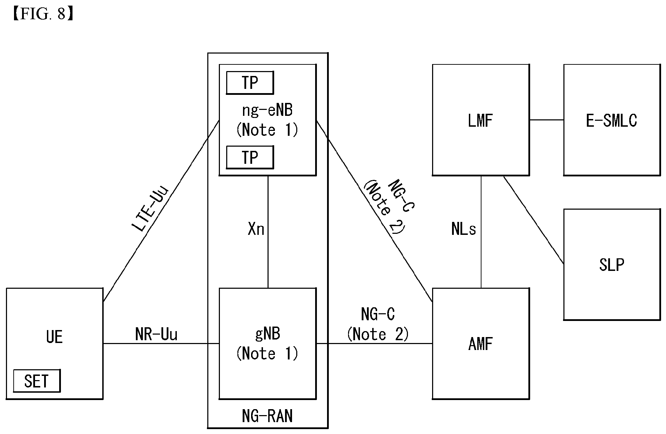

FIG. 8 is a diagram illustrating an example of architecture of a system for measuring a location of an UE.

Referring to FIG. 8, the AMF (Core Access and Mobility Management Function) may receive a request for location service related to a specific target UE from another entity such as the GMLC (Gateway Mobile Location Center), or may decide to start the location service on behalf of the specific target UE in the AMF itself. Then, the AMF transmits a location service request to the LMF (Location Management Function). The LMF receiving the location service request may process the location service request and return a processing result including the estimated location of the UE to the AMF. On the other hand, based on the location service request being received from another entity such as the GMLC other than the AMF, the AMF may transmit the processing result received from the LMF to another entity.

New generation evolved-NB (ng-eNB) and gNB may be network elements of NG-RAN that can provide measurement results for location tracking, and measure a radio signal for the target UE and transmit the result to the LMF. In addition, the ng-eNB may control some TPs (Transmission Points), such as remote radio heads, or PRS-only TPs supporting a PRS-based beacon system for E-UTRA.

The LMF may be connected to an Enhanced Serving Mobile Location Center (E-SMLC), and the E-SMLC may enable the LMF to access the E-UTRAN. For example, the E-SMLC may enable the LMF to support Observed Time Difference Of Arrival (OTDOA) which is one of the E-UTRAN positioning measurement methods, based on the downlink measurement which is obtained by the target UE through a signal transmitted from TPs dedicated for PRS in the eNB and/or E-UTRAN.

Meanwhile, the LMF may be connected to a SUPL Location Platform (SLP). The LMF may support and manage different location services for target UEs. The LMF may interact with the serving ng-eNB or serving gNB for the target UE to obtain the location measurement of the UE. For positioning of the target UE, the LMF may determine a positioning measurement method based on Location Service (LCS) client type, required QoS (Quality of Service), UE positioning capabilities, and gNB positioning capabilities and ng-eNB positioning capabilities, and apply this positioning measurement method to the serving gNB and/or the serving ng-eNB. Then, the LMF may determine a position estimate for the target UE and additional information such as accuracy of the position estimate and velocity. The SLP is a SUPL (Secure User Plane Location) entity responsible for positioning through a user plane.

The UE may measure the location of the UE by utilizing a downlink reference signal transmitted from the NG-RAN and the E-UTRAN. In this case, the downlink reference signal transmitted from the NG-RAN and the E-UTRAN to the UE may include an SS/PBCH block, CSI-RS and/or PRS, etc., and whether to measure the location of the UE using any downlink reference signal may depend on a configuration such as LMF/E-SMLC/ng-eNB/E-UTRAN, etc. In addition, the location of the UE may be measured in a RAT-independent method using different GNSS (Global Navigation Satellite System), TBS (Terrestrial Beacon System), WLAN access points, Bluetooth beacon and a sensor (e.g. barometric pressure sensor) built into the UE. The UE may include an LCS application, and access the LCS application through communication with a network to which the UE is connected or other applications included in the UE. The LCS application may include measurement and calculation functions necessary to determine the location of the UE. For example, the UE may include an independent positioning function such as Global Positioning System (GPS), and may report the location of the UE independently of NG-RAN transmission. The independently acquired positioning information may be utilized as auxiliary information of positioning information acquired from the network.

Position measurement procedure

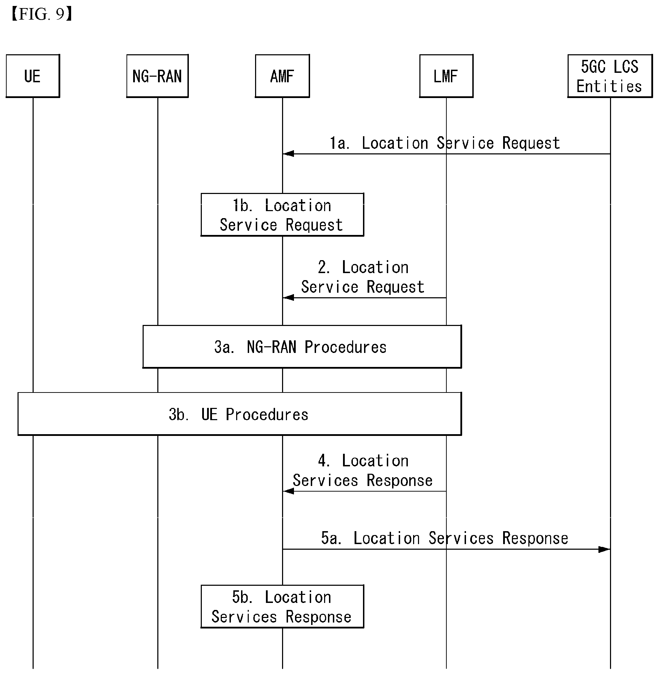

FIG. 9 is a diagram illustrating an example of a procedure for measuring a location of a UE.

When the UE is in CM-IDLE (Connection Management - IDLE) state, when the AMF receives a location service request, the AMF may establish a signaling connection with the UE, and request a network trigger service to allocate a specific serving gNB or ng-eNB. This operation process is omitted in FIG. 9. That is, in FIG. 8, it may be assumed that the UE is in a connected mode. However, the signaling connection may be released during the positioning process by the NG-RAN for reasons such as signaling and data inactivity.

Looking at the operation process of the network for measuring the location of the UE in detail with reference to FIGS. 8 and 9, in step 1a, a 5GC entity such as GMLC may request a location service for measuring the location of a target UE with a serving AMF. However, even if the GMLC does not request the location service, based on step 1b, the serving AMF may determine that the location service is necessary for measuring the location of the target UE. For example, in order to measure the location of the UE for an emergency call, the serving AMF may decide to directly perform the location service.

Then, based on step 2, the AMF may send a location service request to the LMF, and based on step 3a, the LMF may initiate location procedures for obtaining location measurement data or location measurement assistance data together with the serving ng-eNB and the serving gNB. For example, the LMF may request location-related information related to one or more UEs to the NG-RAN, and instruct the type of location information required and the associated QoS. Then, in response to the request, the NG-RAN may transmit the location-related information to the LMF. In this case, based on the method for determining the location by the request being E-CID, the NG-RAN may transmit additional location-related information to the LMF through one or more NRPPa messages. Here, 'location-related information' may mean all values used for location calculation, such as actual location estimation information and wireless measurement or location measurement, etc. In addition, the protocol used in step 3a may be an NRPPa protocol, which will be described later.

Additionally, based on step 3b, the LMF may initiate location procedures for downlink positioning with the UE. For example, the LMF may send location assistance data to the UE, or obtain a location estimate or location measurement. For example, in step 3b, a capability transfer process may be performed. Specifically, the LMF may request capability information from the UE, and the UE may transmit capability information to the LMF. In this case, the capability information may include information on a location measurement method that the LFM or UE can support, information on various aspects of a specific location measurement method, such as various types of assistance data for A-GNSS, and information on common characteristics that are not limited to any one location measurement method, such as the ability to handle multiple LPP transactions, etc. Meanwhile, in some cases, even if the LMF does not request capability information from the UE, the UE may provide capability information to the LMF.

As another example, a location assistance data transfer process may be performed in step 3b. Specifically, the UE may request location assistance data from the LMF, and may indicate required specific location assistance data to the LMF. Then, the LMF may deliver location assistance data corresponding thereto to the UE, and additionally, may transmit additional assistance data to the UE through one or more additional LPP messages. On the other hand, location assistance data transmitted from the LMF to the UE may be transmitted through a unicast method, and in some cases, the LMF may transmit location assistance data and/or additional assistance data to the UE without the UE requesting assistance data from the LMF.

As another example, a location information transfer process may be performed in step 3b. Specifically, the LMF may request the UE for location-related information related to the UE, and may indicate the type of location information required and the associated QoS. Then, in response to the request, the UE may transmit the location related information to the LMF. In this case, the UE may additionally transmit additional location-related information to the LMF through one or more LPP messages. Here, 'location-related information' may mean all values used for location calculation, such as actual location estimation information and wireless measurement or location measurement, etc, and representatively, there may be a Reference Signal Time Difference (RSTD) value measured by the UE based on downlink reference signals transmitted from a plurality of NG-RAN and/or E-UTRAN to the UE. Similar to the above, the UE may transmit the location-related information to the LMF even if there is no request from the LMF.

On the other hand, the processes made in step 3b described above may be performed independently, but may be performed continuously. In general, step 3b is performed in the order of a capability transfer process, an assistance data transfer process, and a location information transfer process, but is not limited to this order. In other words, step 3b is not limited to a specific order in order to improve the flexibility of location measurement. For example, the UE may request location assistance data at any time to perform the location measurement request already requested by the LMF. In addition, if the location information delivered by the UE does not satisfy the QoS required, the LMF may also request location information, such as location measurements or location estimates, at any time. Similarly, when the UE does not perform measurement for location estimation, the UE may transmit capability information to the LMF at any time.

In addition, when an Error occurs in the information or request exchanged between the LMF and the UE in step 3b, an Error message may be transmitted/received, and an Abort message may be transmitted/received for stopping position measurement.

On the other hand, the protocol used in step 3b may be an LPP protocol, which will be described later.

Meanwhile, step 3b may be additionally performed after step 3a is performed, or may be performed instead of step 3a.

In step 4, the LMF may provide a location service response to the AMF. In addition, the location service response may include information on whether the location estimation of the UE was successful and the location estimate of the UE. After that, if the procedure of FIG. 9 is initiated by step 1a, the AMF may deliver a location service response to a 5GC entity such as GMLC, and if the procedure of FIG. 9 is initiated by step 1b, the AMF may use a location service response to provide a location service related to an emergency call or the like.

In the protocol for location measurement described below, definitions of some terms may be based on Table 8 below.

[Table 8]

| |
|---|
| -NR-Uu interface: The NR-Uu interface, connecting the UE to the gNB over the air, is used as one of several transport links for the LTE Positioning Protocol for a target UE with NR access to NG-RAN. |
| - LTE-Uu interface: The LTE-Uu interface, connecting the UE to the ng-eNB over the air, is used as one of several transport links for the LTE Positioning Protocol for a target UE with LTE access to NG-RAN. |
| - NG-C interface: The NG-C interface between the gNB and the AMF and between the ng-eNB and the AMF is transparent to all UE-positioning-related procedures. It is involved in these procedures only as a transport link for the LTE Positioning Protocol. For gNB related positioning procedures, the NG-C interface transparently transports both positioning requests from the LMF to the gNB and positioning results from the gNB to the LMF. For ng-eNB related positioning procedures, the NG-C interface transparently transports both positioning requests from the LMF to the ng-eNB and positioning results from the ng-eNB to the LMF. |
| - NLs interface: The NLs interface, between the LMF and the AMF, is transparent to all UE related, gNB related and ng-eNB related positioning procedures. It is used only as a transport link for the LTE Positioning Protocols LPP and NRPPa. |

LTE Positioning Protocol (LPP)

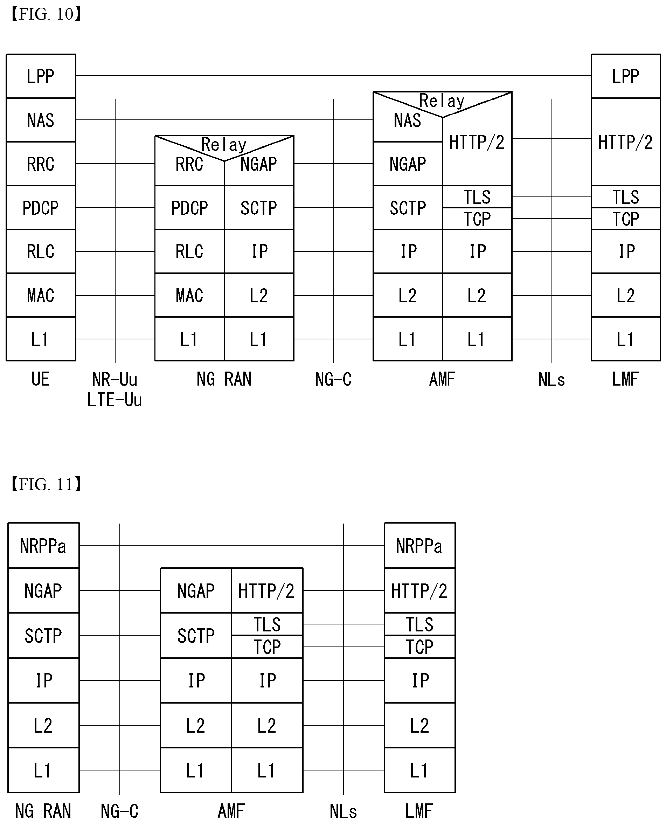

FIG. 10 is a diagram illustrating an example of a protocol layer for supporting LPP message transmission.

Referring to FIG. 10, an LPP PDU may be transmitted through a NAS PDU between the MAF and the UE. The LPP may terminate a connection between a target device (e.g. UE in the control plane or SUPL Enabled Terminal (SET) in the user plane) and a location server (e.g. LMF in the control plane or SLP in the user plane). The LPP message may be delivered in the form of a transparent PDU through an intermediate network interface using an appropriate protocol such as NGAP through the NG-C interface, NAS/RRC through the LTE-Uu and NR-Uu interfaces. The LPP protocol enables positioning for NR and LTE based on various positioning methods.

For example, the target device and the location server may exchange capability information, assistance data for positioning, and/or location information with each other through the LPP protocol. In addition, error information exchange and/or an instruction to stop the LPP procedure may be performed through the LPP message.

LPP procedures for UE Positioning

A signal transmission/reception operation based on the LPP protocol to which the method proposed in the present disclosure can be applied may be performed based on Table 9 below.

[Table 9]

As described above, the protocol operates between a "target" and a "server". In the control-plane context, these entities are the UE and LMF respectively; in the SUPL context they are the SET and the

SLP. A procedure may be initiated by either the target or the server.

1) Capability Transfer

Capabilities in an LPP context refer to the ability of a target or server to support different position methods defined for LPP, different aspects of a particular position method (e.g. different types of assistance data for A-GNSS) and common features not specific to only one position method (e.g. ability to handle multiple LPP transactions). These capabilities are defined within the LPP protocol and transferred between the target and the server using LPP transport.

The exchange of capabilities between a target and a server may be initiated by a request or sent as "unsolicited" information. If a request is used, the server sends an LPP Request Capabilities message to the target device with a request for capability information. The target sends an LPP Provide Capabilities message.

Example of LPP Capability Transfer procedure

1. The server may send a request for the LPP related capabilities of the target.

2. The target transfers its LPP-related capabilities to the server. The capabilities may refer to particular position methods or may be common to multiple position methods.

LPP Capability Indication procedure is used for unsolicited capability transfer.

2) Assistance data Transfer

Assistance data may be transferred either by request or unsolicited. In this version of the specification, assistance data delivery is supported only via unicast transport from server to target.

Example of LPP Assistance Data Transfer procedure

1. The target may send a request to the server for assistance data and may indicate the particular assistance data needed.

2.The server transfers assistance data to the target. The transferred assistance data should match any assistance data requested in step 1.

3. Optionally, the server may transfer additional assistance data to the target in one or more additional LPP messages.

LPP Assistance Data Delivery procedure is used for unilateral assistance data transfer. This procedure is unidirectional; assistance data are always delivered from the server to the target.

3) Location Information Transfer

The term "location information" applies both to an actual position estimate and to values used in computing position (e.g., radio measurements or positioning measurements). It is delivered either in response to a request or unsolicited.

Example of LPP Location Information Transfer procedure

1. The server may send a request for location information to the target, and may indicate the type of location information needed and associated QoS.

2. In response to step 1, the target transfers location information to the server. The location information transferred should match the location information requested in step 1.

3. Optionally (e.g., if requested in step 1), the target in step 2 may transfer additional location information to the server in one or more additional LPP messages.

LPP Location Information Delivery procedure is used for unilateral location information transfer.

Furthermore, the LPP Location Information Delivery procedure can only be piggybacked in the MO-LR request.

4) Multiple Transactions

Multiple LPP transactions may be in progress simultaneously between the same target and server nodes, to improve flexibility and efficiency. However, no more than one LPP procedure between a

(continued)

particular pair of target and server nodes to obtain location information shall be in progress at any time for the same position method.

In this example, the objective is to request location measurements from the target, and the server does not provide assistance data in advance, leaving the target to request any needed assistance data.

Example of multiple LPP procedures

1. The server sends a request to the target for positioning measurements.

2. The target sends a request for particular assistance data.

3. The server returns the assistance data requested in step 2.

4. The target obtains and returns the location information (e.g., positioning method measurements) requested in step 1.

5) Error handling

The procedure is used to notify the sending endpoint by the receiving endpoint that the receiving LPP message is erroneous or unexpected. This procedure is bidirectional at the LPP level; either the target or the server may take the role of either endpoint in the corresponding procedure.

Example of Error handling procedure

1. The target or server sends a LPP message to the other endpoint (i.e, "Server/Target").

2. If the server or target ("Server/Target") detects that the receiving LPP message is erroneous or unexpected, the server or target transfers error indication information to the other endpoint ("Target/Server").

6) Abort

The procedure is used to notify the other endpoint by one endpoint to abort an ongoing procedure between the two endpoints. This procedure is bidirectional at the LPP level; either the target or the server may take the role of either endpoint in the corresponding procedure.

Example of Abort procedure

1. A LPP procedure is ongoing between target and server.

2. If the server or target ("Server/Target") determines that the procedure must be aborted, and then the server or target sends an LPP Abort message to the other endpoint ("Target/Server") carrying the transaction ID for the procedure.

NR Positioning Protocol A (NRPPa)

FIG. 11 is a diagram illustrating an example of a protocol layer for supporting NRPPa transmission. Specifically, FIG. 11 illustrates a protocol layer for supporting transmission of an NRPPa PDU (NR Positioning Protocol a Protocol Data Unit).

The NRPPa may be used for information exchange between the NG-RAN node and the LMF. Specifically, the NRPPa may used to exchange E-CID for measurement transmitted from ng-eNB to LMF, data for supporting the OTDOA positioning method, Cell-ID and Cell location ID for the NR Cell ID positioning method, and the like. The AMF may route NRPPa PDUs based on the routing ID of the associated LMF through the NG-C interface even if there is no information on the associated NRPPa transaction.

The procedure of the NRPPa protocol for location and data collection can be divided into two types. The first type is a UE associated procedure for delivering information on a specific UE (e.g. location measurement information, etc.), and the second type is a non-UE associated procedure for delivering information applicable to an NG-RAN node and related TPs (e.g. gNB/ng-eNG/TP timing information, etc.). The two types of procedures may be supported independently or at the same time.

NRPPa Procedure

A signal transmission/reception operation based on the NRPPa protocol to which the embodiments proposed in the present disclosure can be applied may be performed based on Table 10 below.

[Table 10]

Positioning and data acquisition transactions between a LMF and NG-RAN node are modelled by using procedures of the NRPPa protocol. There are two types of NRPPa procedures:
- UE associated procedure, i.e. transfer of information for a particular UE (e.g. positioning measurements);

(continued)

- Non UE associated procedure, i.e. transfer of information applicable to the NG-RAN node and associated TPs (e.g. gNB/ng-eNB/TP timing information).

Parallel transactions between the same LMF and NG-RAN node are supported; i.e. a pair of LMF and NG-RAN node may have more than one instance of an NRPPa procedure in execution at the same time.

For possible extensibility, the protocol is consedered to operate between a generic "access node" (e.g. ng-eNB) and a "server" (e.g. LMF). A procedure is only initiated by the server.

Example of a single NRPPa transaction

1. Access Node sends NRPPa Procedure Request to Server.

2. Server sends NRPPa Procedure Response to Access Node.

N. Access Node sends NRPPa Procedure Response (end transaction) to server. (this step may be omitted).

The exmaple shows a single NRPPa transaction. The transaction is terminated in step 2 in the case of a non UE associated procedure. For a UE associated procedure to gather information concerning the access node, additional responses may be allowed (e.g. sending of updated information periodically

and/or whenever there is some significant change). In this case, the transaction may be ended after some additional responses. In the NRPPa protocol, the described transaction may be realized by the execution of one procedure defined as a request and a response, followed by one or several procedures initiated by the NG-RAN node (each procedure defined as a single message) to realize the additional responses.

An example of LPPa transaction type may be "location Information Transfer". The term "location information" applies both to an actual position estimate and to values used in computing position (e.g., radio measurements or positioning measurements). It is delivered in response to a request.

Example of Location information transfer

1. The server sends a request for location related information to the NG-RAN node, and indicates the type of location information needed and associated Qos. The request may refer to a particular UE.

2. In response to step 1, the NG-RAN Node transfers location related information to the server. The location related information transferred should match the location related information requested in step 1.

3. If requested in step 1, the NG-RAN node may transfer additional location related information to the server in one or more additional NRPPa messages when the positioning method is E-CID for E-UTRA.

In the present disclosure, a message exchanged (transmitted and received) between a UE (a target device)/location server for positioning and a configuration related to the message may be based on Table 11 below.

【Table 11】

```
RequestCapabilities
The RequestCapabilities message body in a LPP message is used by the location server to request
the target device capability information for LPP and the supported individual positioning methods.
-- ASN1START
RequestCapabilities ::= SEQUENCE {
        criticalExtensions          CHOICE {
                c1                                              CHOICE {
                        requestCapabilities-r9          RequestCapabilities-r9-IEs,
                        spare3 NULL, spare2 NULL, spare1 NULL
                },
                criticalExtensionsFuture    SEQUENCE {}
        }
}

RequestCapabilities-r9-IEs ::= SEQUENCE {
        commonIEsRequestCapabilities            CommonIEsRequestCapabilities
        OPTIONAL,       -- Need ON
        a-gnss-RequestCapabilities                      A-GNSS-RequestCapabilities
                OPTIONAL,       -- Need ON
        otdoa-RequestCapabilities               OTDOA-RequestCapabilities
        OPTIONAL,       -- Need ON
        ecid-RequestCapabilities                ECID-RequestCapabilities
        OPTIONAL,       -- Need ON
        epdu-RequestCapabilities                EPDU-Sequence
```

```
                    OPTIONAL,      -- Need ON

       ...,
       [[        sensor-RequestCapabilities-r13    Sensor-RequestCapabilities-r13
OPTIONAL,        -- Need ON
                 tbs-RequestCapabilities-r13              TBS-RequestCapabilities-r13
          OPTIONAL,       -- Need ON
                 wlan-RequestCapabilities-r13     WLAN-RequestCapabilities-r13
OPTIONAL,        -- Need ON
                 bt-RequestCapabilities-r13       BT-RequestCapabilities-r13
OPTIONAL        -- Need ON
       ]],
       [[        nr-ECID-RequestCapabilities-r16   NR-ECID-RequestCapabilities-r16
OPTIONAL,        -- Need ON
                 nr-Multi-RTT-RequestCapabilities-r16
                                                                 NR-Multi-
RTT-RequestCapabilities-r16

                                                 OPTIONAL,      -- Need ON
                 nr-DL-AoD-RequestCapabilities-r16
                                                                 NR-DL-
AoD-RequestCapabilities-r16          OPTIONAL,      -- Need ON
                 nr-DL-TDOA-RequestCapabilities-r16
                                                                 NR-DL-
TDOA-RequestCapabilities-r16         OPTIONAL,      -- Need ON
                     nr-UL-RequestCapabilities-r16          NR-UL-RequestCapabilities-r16
          OPTIONAL        -- Need ON
       ]]
}

-- ASN1STOP


ProvideCapabilities
The ProvideCapabilities message body in a LPP message indicates the LPP capabilities of the target
device to the location server.
-- ASN1START

ProvideCapabilities ::= SEQUENCE {
        criticalExtensions          CHOICE {
                c1                                             CHOICE {
                        provideCapabilities-r9        ProvideCapabilities-r9-IEs,
                        spare3 NULL, spare2 NULL, spare1 NULL
                },
                criticalExtensionsFuture    SEQUENCE {}
        }
}


ProvideCapabilities-r9-IEs ::= SEQUENCE {
        commonIEsProvideCapabilities          CommonIEsProvideCapabilities
        OPTIONAL,
        a-gnss-ProvideCapabilities            A-GNSS-ProvideCapabilities
                OPTIONAL,
        otdoa-ProvideCapabilities             OTDOA-ProvideCapabilities
                OPTIONAL,
        ecid-ProvideCapabilities              ECID-ProvideCapabilities
OPTIONAL,
        epdu-ProvideCapabilities              EPDU-Sequence
```

```
                        OPTIONAL,
        ...,
        [[          sensor-ProvideCapabilities-r13        Sensor-ProvideCapabilities-r13
        OPTIONAL,
                    tbs-ProvideCapabilities-r13              TBS-ProvideCapabilities-r13
                        OPTIONAL,
                    wlan-ProvideCapabilities-r13        WLAN-ProvideCapabilities-r13
        OPTIONAL,
                    bt-ProvideCapabilities-r13          BT-ProvideCapabilities-r13
        OPTIONAL
        ]],
        [[          nr-ECID-ProvideCapabilities-r16     NR-ECID-ProvideCapabilities-r16
        OPTIONAL,
                    nr-Multi-RTT-ProvideCapabilities-r16
                                                                        NR-Multi-
RTT-ProvideCapabilities-r16          OPTIONAL,
                    nr-DL-AoD-ProvideCapabilities-r16
                                                                        NR-DL-
AoD-ProvideCapabilities-r16                 OPTIONAL,
                    nr-DL-TDOA-ProvideCapabilities-r16
                                                                        NR-DL-
TDOA-ProvideCapabilities-r16                OPTIONAL,
                    nr-UL-ProvideCapabilities-r16       NR-UL-ProvideCapabilities-r16
        OPTIONAL
        ]]
}

-- ASN1STOP

RequestAssistanceData
The RequestAssistanceData message body in a LPP message is used by the target device to request
assistance data from the location server.
-- ASN1START

RequestAssistanceData ::= SEQUENCE {
        criticalExtensions          CHOICE {
                c1                                                          CHOICE {
                        requestAssistanceData-r9  RequestAssistanceData-r9-IEs,
                        spare3 NULL, spare2 NULL, spare1 NULL
                },
                criticalExtensionsFuture    SEQUENCE {}
        }
}

RequestAssistanceData-r9-IEs ::= SEQUENCE {
        commonIEsRequestAssistanceData          CommonIEsRequestAssistanceData
        OPTIONAL,
        a-gnss-RequestAssistanceData            A-GNSS-RequestAssistanceData
        OPTIONAL,
        otdoa-RequestAssistanceData                 OTDOA-RequestAssistanceData
                OPTIONAL,
        epdu-RequestAssistanceData                  EPDU-Sequence
                        OPTIONAL,
        ...,
        [[          sensor-RequestAssistanceData-r14
                                                                        Sensor-
```

```
RequestAssistanceData-r14          OPTIONAL,
                tbs-RequestAssistanceData-r14        TBS-RequestAssistanceData-r14
        OPTIONAL,
                wlan-RequestAssistanceData-r14    WLAN-RequestAssistanceData-r14
        OPTIONAL
        ]],
        [[        nr-Multi-RTT-RequestAssistanceData-r16        NR-Multi-RTT-RequestAssistanceData-
r16        OPTIONAL,
                nr-DL-AoD-RequestAssistanceData-r16                NR-DL-AoD-
RequestAssistanceData-r16                OPTIONAL,
                nr-DL-TDOA-RequestAssistanceData-r16        NR-DL-TDOA-RequestAssistanceData-
r16        OPTIONAL
        ]]
}

-- ASN1STOP


ProvideAssistanceData
The ProvideAssistanceData message body in a LPP message is used by the location server to provide
assistance data to the target device either in response to a request from the target device or in an
unsolicited manner.
-- ASN1START


ProvideAssistanceData ::= SEQUENCE {
        criticalExtensions        CHOICE {
                c1                                                        CHOICE {
                        provideAssistanceData-r9  ProvideAssistanceData-r9-IEs,
                        spare3 NULL, spare2 NULL, spare1 NULL
                },
                criticalExtensionsFuture    SEQUENCE {}
        }
}


ProvideAssistanceData-r9-IEs ::= SEQUENCE {
        commonIEsProvideAssistanceData                CommonIEsProvideAssistanceData
        OPTIONAL,        -- Need ON
        a-gnss-ProvideAssistanceData                A-GNSS-ProvideAssistanceData
        OPTIONAL,        -- Need ON
        otdoa-ProvideAssistanceData                                OTDOA-ProvideAssistanceData
                OPTIONAL,        -- Need ON
        epdu-Provide-Assistance-Data                EPDU-Sequence
                OPTIONAL,        -- Need ON
        ...,
        [[
        sensor-ProvideAssistanceData-r14  Sensor-ProvideAssistanceData-r14 OPTIONAL,        --
Need ON
        tbs-ProvideAssistanceData-r14                TBS-ProvideAssistanceData-r14
        OPTIONAL,        -- Need ON
        wlan-ProvideAssistanceData-r14                WLAN-ProvideAssistanceData-r14
        OPTIONAL        -- Need ON
        ]],
        [[        nr-Multi-RTT-ProvideAssistanceData-r16
                                                        NR-Multi-
RTT-ProvideAssistanceData-r16

                                                        OPTIONAL,        -- Need ON
```

```
                    nr-DL-AoD-ProvideAssistanceData-r16
                                                                    NR-DL-
AoD-ProvideAssistanceData-r16     OPTIONAL,        -- Need ON
                    nr-DL-TDOA-ProvideAssistanceData-r16
                                                                    NR-DL-
TDOA-ProvideAssistanceData-r16


                                                    OPTIONAL       -- Need ON
            ]]
}

-- ASN1STOP
```

| ProvideAssistanceData field descriptions |
| --- |
| commonIEsProvideAssistanceData<br>This IE is provided for future extensibility and should not be included in this version of the protocol. |

RequestLocationInformation
The RequestLocationInformation message body in a LPP message is used by the location server to request positioning measurements or a position estimate from the target device.
-- ASN1START

```
RequestLocationInformation ::= SEQUENCE {
        criticalExtensions          CHOICE {
            c1                                              CHOICE {
                requestLocationInformation-r9        RequestLocationInformation-r9-IEs,
                spare3 NULL, spare2 NULL, spare1 NULL
            },
            criticalExtensionsFuture    SEQUENCE {}
        }
}

RequestLocationInformation-r9-IEs ::= SEQUENCE {
        commonIEsRequestLocationInformation

        CommonIEsRequestLocationInformation     OPTIONAL,     -- Need ON
        a-gnss-RequestLocationInformation A-GNSS-RequestLocationInformation      OPTIONAL,
        -- Need ON
        otdoa-RequestLocationInformation  OTDOA-RequestLocationInformation       OPTIONAL,
        -- Need ON
        ecid-RequestLocationInformation           ECID-RequestLocationInformation
        OPTIONAL,        -- Need ON
        epdu-RequestLocationInformation           EPDU-Sequence
            OPTIONAL,        -- Need ON
        ...,
        [[
        sensor-RequestLocationInformation-r13
                                                                    Sensor-
RequestLocationInformation-r13

                                                    OPTIONAL,      -- Need ON
        tbs-RequestLocationInformation-r13TBS-RequestLocationInformation-r13       OPTIONAL,
        -- Need ON
        wlan-RequestLocationInformation-r13        WLAN-RequestLocationInformation-r13
        OPTIONAL,        -- Need ON
```

```
          bt-RequestLocationInformation-r13   BT-RequestLocationInformation-r13 OPTIONAL        --
Need ON
          ]],
          [[          nr-ECID-RequestLocationInformation-r16
                                                                              NR-ECID-
RequestLocationInformation-r16

                                                          OPTIONAL,        -- Need ON
                  nr-Multi-RTT-RequestLocationInformation-r16
                                                                              NR-Multi-
RTT-RequestLocationInformation-r16

                                                          OPTIONAL,        -- Need ON
                  nr-DL-AoD-RequestLocationInformation-r16
                                                                              NR-DL-
AoD-RequestLocationInformation-r16

                                                          OPTIONAL,        -- Need ON
                  nr-DL-TDOA-RequestLocationInformation-r16
                                                                              NR-DL-
TDOA-RequestLocationInformation-r16

                                                          OPTIONAL        -- Need ON
          ]]
}

-- ASN1STOP
```

| RequestLocationInformation field descriptions |
|---|
| commonIEsRequestLocationInformation |
| This field specifies the location information type requested by the location server and optionally other configuration information associated with the requested location information. This field should always be included in this version of the protocol. |

ProvideLocationInformation
The ProvideLocationInformation message body in a LPP message is used by the target device to provide positioning measurements or position estimates to the location server.
-- ASN1START

```
ProvideLocationInformation ::= SEQUENCE {
        criticalExtensions          CHOICE {
                c1                                              CHOICE {
                        provideLocationInformation-r9      ProvideLocationInformation-r9-IEs,
                        spare3 NULL, spare2 NULL, spare1 NULL
                },
                criticalExtensionsFuture    SEQUENCE {}
        }
}

ProvideLocationInformation-r9-IEs ::= SEQUENCE {
        commonIEsProvideLocationInformation

        CommonIEsProvideLocationInformation       OPTIONAL,
        a-gnss-ProvideLocationInformation A-GNSS-ProvideLocationInformation         OPTIONAL,
        otdoa-ProvideLocationInformation  OTDOA-ProvideLocationInformation          OPTIONAL,
        ecid-ProvideLocationInformation           ECID-ProvideLocationInformation
```

```
                OPTIONAL,
                epdu-ProvideLocationInformation          EPDU-Sequence
                        OPTIONAL,

                ...,
                [[
                sensor-ProvideLocationInformation-r13
                                                                                Sensor-
ProvideLocationInformation-r13

                                                                OPTIONAL,
                tbs-ProvideLocationInformation-r13 TBS-ProvideLocationInformation-r13          OPTIONAL,
                wlan-ProvideLocationInformation-r13          WLAN-ProvideLocationInformation-r13
                OPTIONAL,
                bt-ProvideLocationInformation-r13  BT-ProvideLocationInformation-r13 OPTIONAL
                ]],
                [[        nr-ECID-ProvideLocationInformation-r16
                                                                                NR-ECID-
ProvideLocationInformation-r16                OPTIONAL,
                        nr-Multi-RTT-ProvideLocationInformation-r16
                                                                                NR-Multi-RTT-
ProvideLocationInformation-r16 OPTIONAL,
                        nr-DL-AoD-ProvideLocationInformation-r16
                                                                                NR-DL-AoD-
ProvideLocationInformation-r16        OPTIONAL,
                        nr-DL-TDOA-ProvideLocationInformation-r16
                                                                                NR-DL-TDOA-
ProvideLocationInformation-r16        OPTIONAL
                ]]
}

-- ASN1STOP


-- ASN1START

OTDOA-SignalMeasurementInformation ::= SEQUENCE {
                systemFrameNumber               BIT STRING (SIZE (10)),
                physCellIdRef                   INTEGER (0..503),
                cellGlobalIdRef                 ECGI                            OPTIONAL,
                earfcnRef                               ARFCN-ValueEUTRA        OPTIONAL,
                        -- Cond NotSameAsRef0
                referenceQuality        OTDOA-MeasQuality          OPTIONAL,
                neighbourMeasurementList        NeighbourMeasurementList,

                ...,
                [[ earfcnRef-v9a0          ARFCN-ValueEUTRA-v9a0          OPTIONAL          --
Cond NotSameAsRef1
                ]],
                [[ tpIdRef-r14                   INTEGER (0..4095)               OPTIONAL,
                -- Cond ProvidedByServer0
                        prsIdRef-r14            INTEGER (0..4095)               OPTIONAL,
                -- Cond ProvidedByServer1
                        additionalPathsRef-r14
                                                                AdditionalPathList-r14        OPTIONAL,
                        nprsIdRef-r14            INTEGER (0..4095)               OPTIONAL,
                -- Cond ProvidedByServer2
                        carrierFreqOffsetNB-Ref-r14
```

```
                                                      CarrierFreqOffsetNB-r14    OPTIONAL,
            -- Cond NB-IoT
            hyperSFN-r14                BIT STRING (SIZE (10))    OPTIONAL              --
Cond H-SFN
        ]],
        [[
            motionTimeSource-r15                MotionTimeSource-r15                OPTIONAL
        ]]
}

NeighbourMeasurementList ::= SEQUENCE (SIZE(1..24)) OF NeighbourMeasurementElement

NeighbourMeasurementElement ::= SEQUENCE {
        physCellIdNeighbour                INTEGER (0..503),
        cellGlobalIdNeighbour        ECGI                                OPTIONAL,
        earfcnNeighbour                ARFCN-ValueEUTRA                OPTIONAL,
        -- Cond NotSameAsRef2
        rstd                                INTEGER (0..12711),
        rstd-Quality                        OTDOA-MeasQuality,
        ...,
        [[ earfcnNeighbour-v9a0    ARFCN-ValueEUTRA-v9a0        OPTIONAL            --
Cond NotSameAsRef3
        ]],
        [[ tpIdNeighbour-r14        INTEGER (0..4095)                OPTIONAL,            --
Cond ProvidedByServer0
            prsIdNeighbour-r14        INTEGER (0..4095)                OPTIONAL,
        -- Cond ProvidedByServer1
            delta-rstd-r14                INTEGER (0..5)                OPTIONAL,
            additionalPathsNeighbour-r14
                                                AdditionalPathList-r14        OPTIONAL,
            nprsIdNeighbour-r14        INTEGER (0..4095)                OPTIONAL,
        -- Cond ProvidedByServer2
            carrierFreqOffsetNB-Neighbour-r14
                                                CarrierFreqOffsetNB-r14    OPTIONAL
            -- Cond NB-IoT
        ]],
        [[
            delta-SFN-r15                INTEGER (-8192..8191)    OPTIONAL
        ]]
}

AdditionalPathList-r14 ::= SEQUENCE (SIZE(1..maxPaths-r14)) OF AdditionalPath-r14

maxPaths-r14        INTEGER ::= 2

MotionTimeSource-r15 ::= SEQUENCE {
        timeSource-r15                        ENUMERATED    {servingCell,    referenceCell,
gnss, mixed,

        other, none, ...}
}

-- ASN1STOP

-- ASN1START
```

```
ECID-SignalMeasurementInformation ::= SEQUENCE {
        primaryCellMeasuredResults        MeasuredResultsElement  OPTIONAL,
        measuredResultsList                       MeasuredResultsList,
        ...
}

MeasuredResultsList ::= SEQUENCE (SIZE(1..32)) OF MeasuredResultsElement

MeasuredResultsElement ::= SEQUENCE {
        physCellId                                    INTEGER (0..503),
        cellGlobalId                                  CellGlobalIdEUTRA-AndUTRA
        OPTIONAL,
        arfcnEUTRA                                    ARFCN-ValueEUTRA,
        systemFrameNumber                   BIT STRING (SIZE (10))
        OPTIONAL,
        rsrp-Result                                   INTEGER (0..97)
                OPTIONAL,
        rsrq-Result                                   INTEGER (0..34)
                OPTIONAL,
        ue-RxTxTimeDiff                        INTEGER (0..4095)
        OPTIONAL,

        ...,
        [[      arfcnEUTRA-v9a0                                 ARFCN-ValueEUTRA-v9a0
                OPTIONAL            -- Cond EARFCN-max
        ]],
        [[      nrsrp-Result-r14              INTEGER (0..113)
        OPTIONAL,
                nrsrq-Result-r14              INTEGER (0..74)
        OPTIONAL,
                carrierFreqOffsetNB-r14       CarrierFreqOffsetNB-r14           OPTIONAL,
                -- Cond NB-IoT
                hyperSFN-r14                           BIT STRING (SIZE (10))
        OPTIONAL
        ]],
        [[
                rsrp-Result-v1470             INTEGER (-17..-1)
        OPTIONAL,
                rsrq-Result-v1470             INTEGER (-30..46)
        OPTIONAL
        ]]
}

-- ASN1STOP

-- ASN1START

NR-DL-TDOA-SignalMeasurementInformation-r16 ::= SEQUENCE {
        dl-PRS-ReferenceInfo-r16            DL-PRS-IdInfo-r16,
        nr-DL-TDOA-MeasList-r16 NR-DL-TDOA-MeasList-r16,
        ...
}

NR-DL-TDOA-MeasList-r16 ::= SEQUENCE (SIZE(1.. nrMaxTRPs)) OF NR-DL-TDOA-MeasElement-
r16

NR-DL-TDOA-MeasElement-r16 ::= SEQUENCE {
```

```
            trp-ID-r16                                      TRP-ID-r16
            OPTIONAL,
            nr-DL-PRS-ResourceId-r16              NR-DL-PRS-ResourceId-r16
OPTIONAL,
            nr-DL-PRS-ResourceSetId-r16          NR-DL-PRS-ResourceSetId-r16 OPTIONAL,
            nr-TimeStamp-r16                             NR-TimeStamp-r16,
            nr-RSTD-r16                                      INTEGER (0..ffs),--  FFS  on
the value range
            nr-AdditionalPathList-r16       NR-AdditionalPathList-r16        OPTIONAL,
            nr-TimingMeasQuality-r16                   NR-TimingMeasQuality-r16,
            nr-PRS-RSRP-Result-r16         INTEGER (FFS)                 OPTIONAL,
-- FFS, value range to be decided in RAN4.
            nr-DL-TDOA-AdditionalMeasurements-r16                    NR-DL-TDOA-
AdditionalMeasurements-r16,
            ...
}
NR-DL-TDOA-AdditionalMeasurements-r16  ::=  SEQUENCE  (SIZE  (1..3))  OF  NR-DL-TDOA-
AdditionalMeasurementElement-r16

NR-AdditionalPathList-r16 ::= SEQUENCE (SIZE(1..2)) OF NR-AdditionalPath-r16

NR-DL-TDOA-AdditionalMeasurementElement-r16 ::= SEQUENCE {
            nr-DL-PRS-ResourceId-r16                    NR-DL-PRS-ResourceId-r16
OPTIONAL,
            nr-DL-PRS-ResourceSetId-r16          NR-DL-PRS-ResourceSetId-r16 OPTIONAL,
            nr-TimeStamp-r16                             NR-TimeStamp-r16,
            nr-RSTD-ResultDiff-r16                  INTEGER (0..ffs),-- FFS on the value range to
be decided in RAN4
            dl-PRS-RSRP-ResultDiff-r16          INTEGER (FFS)          OPTIONAL, -- FFS on the
value range         to be decided in RAN4
            nr-AdditionalPathList-r16       NR-AdditionalPathList-r16           OPTIONAL,
...
}

nrMaxTRPs                  INTEGER ::= 256              -- Max TRPs per UE

-- ASN1STOP

-- ASN1START

NR-DL-AoD-SignalMeasurementInformation-r16 ::= SEQUENCE {
            nr-DL-AoD-MeasList-r16                  NR-DL-AoD-MeasList-r16,
            ...
}
NR-DL-AoD-MeasList-r16 ::= SEQUENCE (SIZE(1..nrMaxTRPs)) OF NR-DL-AoD-MeasElement-r16

NR-DL-AoD-MeasElement-r16 ::= SEQUENCE {
            trp-ID-r16                                          TRP-ID-r16
                  OPTIONAL,
            nr-DL-PRS-ResourceId-r16                    NR-DL-PRS-ResourceId-r16
OPTIONAL,
            nr-DL-PRS-ResourceSetId-r16                 NR-DL-PRS-ResourceSetId-r16
OPTIONAL,
            nr-TimeStamp-r16                                 NR-TimeStamp-r16,
            nr-PRS-RSRP-Result-r16                      INTEGER (FFS)
            OPTIONAL, -- Need RAN4 inputs on value range
```

```
            nr-DL-PRS-RxBeamIndex-r16                INTEGER (1..8),
            nr-TimingMeasQuality-r16                 NR-TimingMeasQuality-r16,
            nr-DL-Aod-AdditionalMeasurements-r16     NR-DL-AoD-AdditionalMeasurements-
r16,
        ...
}


NR-DL-AoD-AdditionalMeasurements-r16    ::=    SEQUENCE    (SIZE    (1..7))    OF    NR-DL-AoD-
AdditionalMeasurementElement-r16

NR-DL-AoD-MeasurementElement-r16 ::= SEQUENCE {
            nr-DL-PRS-ResourceId-r16                 NR-DL-PRS-ResourceId-r16
OPTIONAL,
            nr-DL-PRS-ResourceSetId-r16              NR-DL-PRS-ResourceSetId-r16
OPTIONAL,
            nr-TimeStamp-r16                                 NR-TimeStamp-r16,
            nr-PRS-RSRP-ResultDiff-r16               INTEGER (FFS)
            OPTIONAL, -- Need RAN4 inputs on value range
            nr-DL-PRS-RxBeamIndex-r16                INTEGER (1..8),
        ...
}


nrMaxTRPs              INTEGER ::= 256          -- Max TRPs


-- ASN1STOP


–         NR-TimeStamp
The IE NR-TimeStamp defines the UE measurement associated time stamp.
-- ASN1START


NR-TimeStamp-r16 ::= SEQUENCE {
            dl-PRS-ID-r16                    INTEGER (0..255),
            nr-PhysCellID-r16                NR-PhysCellID-r16                    OPTIONAL,
            -- Need ON
            nr-CellGlobalID-r16              NCGI-r15
            OPTIONAL,       -- Need ON
            nr-ARFCN-r16                     ARFCN-ValueNR-r15
            OPTIONAL,       -- Cond NotSameAsRefServ
            nr-SFN-r16                               INTEGER (0..1023),
            nr-Slot-r16                      CHOICE {
                scs15-r16                        INTEGER (0..9),
                scs30-r16                        INTEGER (0..19),
                scs60-r16                        INTEGER (0..39),
                scs120-r16                       INTEGER (0..79)
            },
            ...
}


-- ASN1STOP
```

| Conditional presence | Explanation |
|---|---|
| NotSameAsRefServ0 | The field is mandatory present if the SFN is not from the reference TRP; otherwise it is not present. |

Positioning Measurement Method

The positioning measurement methods supported by NG-RAN may include GNSS, OTDOA, E-CID (enhanced cell ID), Multi RTT (round trip time)/Multi-cell RTT, barometric pressure sensor positioning, WLAN positioning, Bluetooth positioning, and TBS (terrestrial beacon system), UTDOA (Uplink Time Difference of Arrival), etc. Among the positioning measurement methods, any one positioning measurement method may be used to measure the location of the UE, but two or more positioning measurement methods may be used to measure the location of the UE.

In the positioning measurement method described below, definitions of some terms may be based on Table 12 below.

【Table 12】

| 5.1.13 Reference signal time difference (RSTD) for E-UTRA | |
|---|---|
| Definition | The relative timing difference between the E-UTRA neighbour cell j and the E-UTRA reference cell i, defined as TSubframeRxj – TSubframeRxi, where: TSubframeRxj is the time when the UE receives the start of one subframe from E-UTRA cell j TSubframeRxi is the time when the UE receives the corresponding start of one subframe from E-UTRA cell i that is closest in time to the subframe received from E-UTRA cell j. The reference point for the observed subframe time difference shall be the antenna connector of the UE. |
| Applicable for | RRC_CONNECTED inter-RAT |

| 5.1.28 DL PRS reference signal received power (DL PRS-RSRP) | |
|---|---|
| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth.<br><br>For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
| Applicable for | RRC_CONNECTED intra-frequency, RRC_CONNECTED inter-frequency |

| 5.1.29 DL relative signal time difference (DL RSTD) | |
|---|---|

| Definition | DL relative timing difference (DL RSTD) between the positioning node j and the reference positioning node i, is defined as TSubframeRxj – TSubframeRxi,<br><br>Where:<br>TSubframeRxj is the time when the UE receives the start of one subframe from positioning node j.<br>TSubframeRxi is the time when the UE receives the corresponding start of one subframe from positioning node i that is closest in time to the subframe received from positioning node j.<br><br>Multiple DL PRS resources can be used to determine the start of one subframe from a positioning node.<br><br>For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency<br>RRC_CONNECTED inter-frequency |

### 5.1.29    DL reference signal time difference (DL RSTD)

| Definition | DL reference signal time difference (DL RSTD) is the DL relative timing difference between the positioning node j and the reference positioning node i, defined as TSubframeRxj – TSubframeRxi,<br><br>Where:<br>TSubframeRxj is the time when the UE receives the start of one subframe from positioning node j.<br>TSubframeRxi is the time when the UE receives the corresponding start of one subframe from positioning node i that is closest in time to the subframe received from positioning node j.<br><br>Multiple DL PRS resources can be used to determine the start of one subframe from a positioning node.<br><br>For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency<br>RRC_CONNECTED inter-frequency |

### 5.1.30    UE Rx – Tx time difference

| Definition | The UE Rx – Tx time difference is defined as TUE-RX – TUE-TX<br><br>Where:<br>TUE-RX is the UE received timing of downlink subframe #i from a positioning node, defined by the first detected path in time.<br>TUE-TX is the UE transmit timing of uplink subframe #j that is closest in time to the subframe #i received from the positioning node.<br><br>Multiple DL PRS resources can be used to determine the start of one subframe of the first arrival path of the positioning node.<br><br>For frequency range 1, the reference point for TUE-RX measurement shall be the Rx antenna connector of the UE and the reference point for TUE-TX measurement shall be the Tx antenna connector of the UE. For frequency range 2, the reference point for TUE-RX measurement shall be the Rx antenna of the UE and the reference point for TUE-TX measurement shall be the Tx antenna of the UE. |
|---|---|

| Applicable for | RRC_CONNECTED intra-frequency<br>RRC_CONNECTED inter-frequency |
|---|---|

### 5.2.2    UL Relative Time of Arrival (TUL-RTOA)

| Definition | [The UL Relative Time of Arrival (TUL-RTOA) is the beginning of subframe i containing SRS received in positioning node j, relative to the configurable reference time.]<br><br>Multiple SRS resources for positioning can be used to determine the beginning of one subframe containing SRS received at a positioning node.<br><br>The reference point for TUL-RTOA shall be:<br>-    for type 1-C base station TS 38.104 [9]: the Rx antenna connector,<br>-    for type 1-O or 2-O base station TS 38.104 [9]: the Rx antenna,<br>-    for type 1-H base station TS 38.104 [9]: the Rx Transceiver Array Boundary connector. |
|---|---|

### 5.2.3    gNB Rx – Tx time difference

| Definition | The gNB Rx – Tx time difference is defined as TgNB-RX – TgNB-TX<br><br>Where:<br>TgNB-RX is the positioning node received timing of uplink subframe #i containing SRS associated with UE, defined by the first detected path in time.<br>TgNB-TX is the positioning node transmit timing of downlink subframe #j that is closest in time to the subframe #i received from the UE.<br><br>Multiple SRS resources for positioning can be used to determine the start of one subframe containing SRS.<br><br>The reference point for TgNB-RX shall be:<br>-    for type 1-C base station TS 38.104 [9]: the Rx antenna connector,<br>-    for type 1-O or 2-O base station TS 38.104 [9]: the Rx antenna,<br>-    for type 1-H base station TS 38.104 [9]: the Rx Transceiver Array Boundary connector.<br>The reference point for TgNB-TX shall be:<br>-    for type 1-C base station TS 38.104 [9]: the Tx antenna connector,<br>-    for type 1-O or 2-O base station TS 38.104 [9]: the Tx antenna,<br>-    for type 1-H base station TS 38.104 [9]: the Tx Transceiver Array Boundary connector. |
|---|---|

### 5.2.4    UL Angle of Arrival (UL AoA)

| Definition | UL Angle of Arrival (UL AoA) is defined as the estimated azimuth angle and vertical angle of a UE with respect to a reference direction, wherein the reference direction is defined:<br><br>-    In the global coordinate system (GCS), wherein estimated azimuth angle is measured relative to geographical North and is positive in a counter-clockwise direction and estimated vertical angle is measured relative to zenith and positive to horizontal direction<br>-    In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14].<br>The UL AoA is determined at the gNB antenna for an UL channel corresponding to this UE. |
|---|---|

### 5.2.5    UL SRS reference signal received power (UL SRS-RSRP)

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. |
|---|---|
| | For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |

OTDOA (Observed Time Difference Of Arrival)

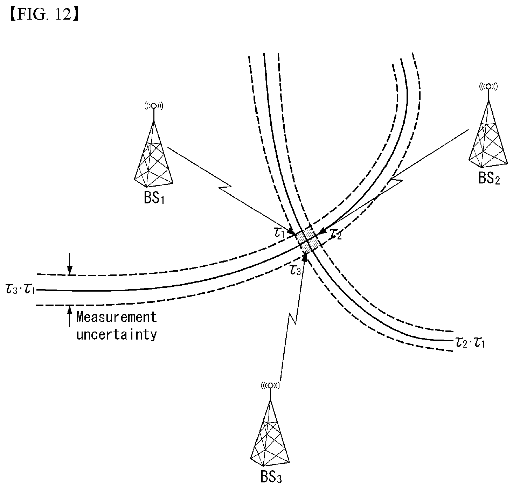

FIG. 12 is a diagram illustrating an example of an OTDOA positioning measurement method.

In the OTDOA positioning measurement method uses the measurement timing of downlink signals received by the UE from multiple TPs including an eNB, an ng-eNB, and a PRS-only TP. The UE measures the timing of the received downlink signals by using the location assistance data received from the location server. In addition, the location of the UE may be determined based on these measurement results and the geographic coordinates of the contiguous TPs.

A UE connected to the gNB may request a measurement gap for OTDOA measurement from the TP. If the UE does not recognize the SFN for at least one TP in the OTDOA assistance data, the UE may use the autonomous gap to obtain the SFN of the OTDOA reference cell before requesting the measurement gap for performing Reference Signal Time Difference (RSTD) measurement.

Here, the RSTD may be defined based on the smallest relative time difference between the boundaries of two subframes respectively received from the reference cell and the measurement cell. That is, it may be calculated based on the relative time difference between the start times of the subframes of the reference cell closest to the start time of the subframe received from the measurement cell. Meanwhile, the reference cell may be selected by the UE.

For accurate OTDOA measurement, it is necessary to measure the time of arrival (TOA) of a signal received from three or more geographically dispersed TPs or base stations. For example, the TOA for each of TP 1, TP 2 and TP 3 may be measured, the RSTD for TP 1-TP 2, the RSTD for TP 2-TP 3, and the RSTD for TP 3-TP 1 may be calculated based on the three TOAs, a geometric hyperbola may be determined based on this, and a point where these hyperbola intersects may be estimated as the location of the UE. In this case, since accuracy and/or uncertainty for each TOA measurement may occur, the estimated location of the UE may be known as a specific range depending on the measurement uncertainty.

For example, RSTDs for two TPs may be calculated based on Equation 3 below.

【Equation 3】

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Hhere, c may be the speed of light, {xt, yt} may be the (unknown) coordinates of the target UE, {xi, yi} may be the coordinates of the (known) TP, and {25, y1} may be the coordinates of the reference TP (or other TP). Here, (Ti-T1) is a transmission time offset between two TPs, which may be referred to as "Real Time Differences" (RTDs), and ni and n1 may represent values related to UE TOA measurement errors.

E-CID (Enhanced Cell ID)

In the cell ID (CID) positioning measurement method, the location of the UE may be measured through geographic information of the serving ng-eNB, the serving gNB and/or the serving cell of the UE. For example, geographic information of the serving ng-eNB, the serving gNB, and/or the serving cell may be obtained through paging, registration, or the like.

Meanwhile, the E-CID positioning measurement method may use additional UE measurement and/or NG-RAN radio resources and the like for improving the UE location estimate in addition to the CID positioning measurement method. In the E-CID positioning measurement method, some of the same measurement methods as those of the measurement control system of the RRC protocol may be used, but in general, additional measurement is not performed only for the location measurement of the UE. In other words, a separate measurement configuration or measurement control message may not be provided to measure the location of the UE, and the UE also does not expect that an additional measurement operation only for location measurement will be requested, and the UE may report a measurement value obtained through generally measurable measurement methods.

For example, the serving gNB may implement the E-CID positioning measurement method using the E-UTRA measurement provided from the UE.

An example of a measurement element that can be used for E-CID positioning may be as follows.

- UE measurement: E-UTRA RSRP (Reference Signal Received Power), E-UTRA RSRQ (Reference Signal Received Quality), UE E-UTRA reception-transmission time difference (Rx-Tx Time difference), GERAN / WLAN RSSI ( Reference Signal Strength Indication), UTRAN CPICH (Common Pilot Channel) RSCP (Received Signal Code Power), UTRAN CPICH Ec/Io
- E-UTRAN measurement: ng-eNB reception-transmission time difference (Rx-Tx Time difference), timing advance (Timing Advance; TADV), Angle of Arrival (AoA)

Here, TADV may be divided into Type 1 and Type 2 as follows.

$$\text{TADV Type 1} = (\text{ng-eNB reception-transmission time difference}) + (\text{UE E-UTRA reception-transmission time difference})$$

$$\text{TADV Type 2} = \text{ng-eNB reception-transmission time difference}$$

On the other hand, AoA may be used to measure the direction of the UE. AoA may be defined as an estimated angle for the location of the UE in a counterclockwise direction from the base station/TP. In this case, the geographic reference direction may be north. The base station/TP may use an uplink signal such as a sounding reference signal (SRS) and/or a demodulation reference signal (DMRS) for AoA measurement. In addition, the larger the antenna array arrangement, the higher the AoA measurement accuracy, when the antenna arrays are arranged at the same interval, signals received from contiguous antenna elements may have a constant phase-rotate.

UTDOA (Uplink Time Difference of Arrival)

UTDOA is a method of determining the location of the UE by estimating the arrival time of the SRS. When calculating the estimated SRS arrival time, the location of the UE may be estimated through the difference in arrival time with another cell (or base station/TP) by using the serving cell as a reference cell. To implement UTDOA, the E-SMLC may instruct the serving cell of the target UE to instruct the target UE to transmit SRS. In addition, the E-SMLC may provide configuration such as whether the SRS is periodic/aperiodic, bandwidth, and frequency/group/sequence hopping, etc.

Multi RTT (Multi-cell RTT)

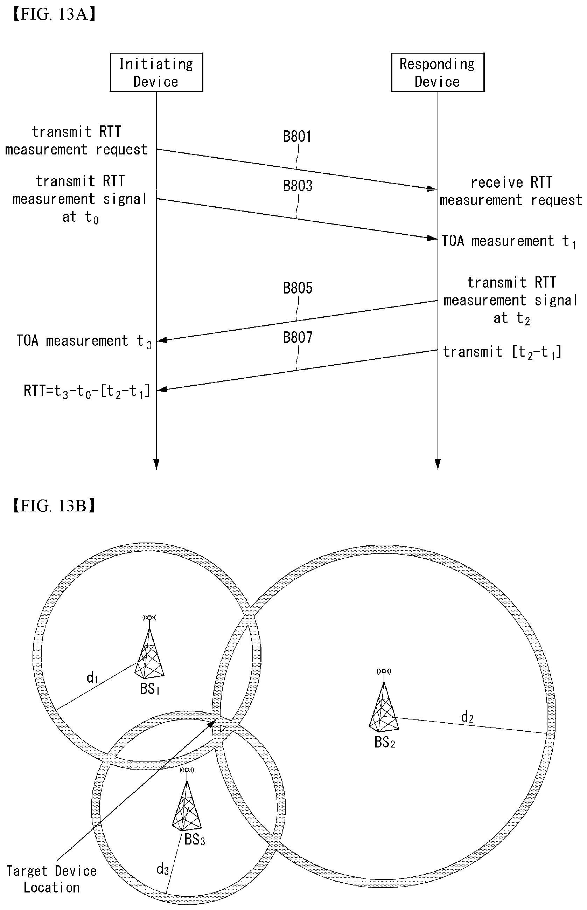

Unlike OTDOA, which requires fine synchronization (e.g. nano-second level) between TPs in the network, RTT is based on TOA measurement like the OTDOA, but requires only coarse TRP (e.g. base station) timing synchronization. Hereinafter, it will be described in detail with reference to FIGS. 13A and 13B.

FIGS. 13A and 13B are diagrams illustrating an example of a Multi RTT positioning measurement method.

Referring to FIG. 13A, an RTT process, in which TOA measurement is performed in an initiating device and a responding device, and the responding device provides the TOA measurement to the initiating device for RTT measurement (calculation), is exemplified. For example, the initiating device may be a TRP and/or a UE, and the responding device may be the UE and/or the TRP.

In operation B801 based on an exemplary embodiment, the initiating device may transmit an RTT measurement request, and the responding device may receive it.

In operation B803 based on an exemplary embodiment, the initiating device may transmit an RTT measurement signal at t0, and the responding device may acquire a TOA measurement t1.

In operation B805 based on an exemplary embodiment, the responding device may transmit the RTT measurement signal at t2, and the initiating device may acquire a TOA measurement t3.

In operation B807 based on an exemplary embodiment, the responding device may transmit information on [t2-t1], and the initiating device may receive the corresponding information and calculate the RTT based on Equation 4 below. The corresponding information may be transmitted/received based on a separate signal, or may be transmitted/received by being included in the RTT measurement signal of B805.

【Equation 4】

$$ \mathrm{RTT} = t_3 - t_0 - [t_2 - t_1] $$

Referring to FIG. 13B, the corresponding RTT may correspond to double-range measurement between two devices. Positioning estimation may be performed from the corresponding information, and a multilateration technique may be used. Based on the measured RTT, d1, d2, and d3 may be determined, and the target device location may be determined by the intersection of the circumference with each BS1, BS2, BS3 (or TRP) as a center and each d1, d2, and d3 as a radius.

The above-described contents (3GPP system, positioning protocol, procedure for measuring the location of the UE, positioning measurement method, etc.) may be applied in combination with methods proposed in the present disclosure be described later, or may be supplemented to clarify the technical characteristics of the methods proposed in the present disclosure. Methods to be described below are divided for convenience of description, and of course, some components of any one method may be substituted with some components of another method, or may be applied in combination with each other. That is, the various embodiments of the present disclosure described below may be combined in whole or in part to constitute other various embodiments of the present disclosure unless mutually excluded, which can be clearly understood by those of ordinary skill in the art.

Various methods are being studied to improve the positioning measurement results of existing NR systems. In order to enhance timing measurement, discussions are underway to introduce the reference station technique used in existing satellite systems and similarly apply it to the NR system.

The measurement based on GPS or GNSS has performance limitation (error) depending on GPS/GNSS receiver type/capability. Here, the global navigation satellite system (GNSS) is a broad term that encompasses various types of satellite-based positioning, navigation and timing (PNT) systems used around the world. The global positioning system (GPS) is one type of various types related to the GNSS. The reference station(s) is a station where a GNSS receiver is installed at a known location and is used for compensate the limitation (error) of services. The location is pre-surveyed by either traditional methods or by GNSS observation from multiple days. Similarly, a reference UE and/or a reference gNB may be introduced to mitigate the remaining timing error using a UE or a TRP.

In this case, the reference (i.e., the reference UE/reference gNB) needs to be modified and applied to suit the NR system. In relation to the introduction of the reference UE, establishment of additional signaling (LPP(a) message) or related procedures suitable/required for positioning measurement of the NR system is required.

For timing based positioning measurement, LMF may request the UE to measure a DL positioning reference signal through multiple methods. And then, the UE may report measurement instances (RSTD, DL RSRP and/or UE Rx-Tx time difference) to the LMF in a single measurement report. The gNB/TRP also may report multiple measurement instances in a single measurement to the LMF. However, there is currently no requirement to enforce the DL and UL measurements are associated with the same set of DL PRS and UL SRS resources and the same timestamp.

What applies to the reference UE, such as configuration conditions and report contents described in the present disclosure, may also be equally applied to the reference TRP (or reference gNB). For example, the reception-related configuration (e.g., Rx beam) applied to the reference UE for the DL positioning method may be applied as the transmission-related configuration (e.g., Tx beam) when applied to the reference TRP. That is, the reception time and the transmission time may be applied interchangeably. Table 13 below shows agreements related to the measurement instances.

[Table 13]

| Agreement: |
|---|
| Support enabling |
| • A UE to report one or more measurement instances (of RSTD, DL RSRP, and/or UE Rx-Tx ti me difference measurements) in a single measurement report to LMF for UE-assisted positioning, and |

(continued)

| |
|---|
| • A TRP to report one or more measurement instances (of RTOA, UL RSRP, and/or gNB Rx-Tx time difference measurements) in a single measurement report to LMF, and<br>• Each measurement instance is reported with its own timestamp<br>　　　　　　◦ FFS: The measurement instances are within a [configured] measurement time window<br>• FFS: Each UE measurement instance can be configured with N instances of the DL-PRS Resour ce Set<br>　　　　　　◦ FFS: N (including N=1)<br>• FFS: Each TRP measurement instance can be configured with M SRS measurement time occasions<br>　　　　　　o FFS: M (including M=1)<br>• FFS: details of signalling, procedures, and UE capability if any<br>• FFS: whether and how to consider the additional enhancement related to measurement reporting of multi-paths and quality metric<br>• Note 1: A measurement instance refers to one or more measurements, which can either be the s ame or different types, which are obtained from the same DL PRS resource(s), or the same UL SRS resource(s).<br>• Note 2: This enhancement has no intention to change the mapping of measurement types to Rel-16 positioning techniques and no intention to introduce new positioning techniques either. |

In addition, a timing error group (TEG) is defined to consider impacts on the remaining Rx/Tx timing delays and the UE/gNB baseband clock offsets. Table 14 below shows agreements related to TEG.

[Table 14]

| |
|---|
| Agreement:<br>The following definitions are used for the purpose of discussion of internal timing errors (these terms are not agreed to be included in the specifications):<br>　　　　• **Tx timing error:** From a signal transmission perspective, there will be a time delay from the time when the digital signal is generated at baseband to the time when the RF signal is transmitted from the Tx antenna. For supporting positioning, the UE/TRP may implement an internal calibration/compensation of the Tx time delay for the transmission of the DL PRS/UL SRS signals, which may also include the calibration/compensation of the relative time delay between different RF chains in the same TRP/UE. The compensation may also possibly consider the offset of the Tx antenna phase center to the physical antenna center. However, the calibration may not be perfect. The remaining Tx time delay after the calibration, or the uncalibrated Tx time delay is defined as *Tx timing error.*<br>　　　　• **Rx timing error:** From a signal reception perspective, there will be a time delay from the time when the RF signal arrives at the Rx antenna to the time when the signal is digitized and time-stamped at the baseband. For supporting positioning, the UE/TRP may implement an internal calibration/compensation of the Rx time delay before it reports the measurements that are obtained from the DL PRS/UL SRS signals, which may also include the calibration/compensation of the relative time delay between different RF chains in the same TRP/UE. The compensation may also possibly consider the offset of the Rx antenna phase center to the physical antenna center. However, the calibration may not be perfect. The remaining Rx time delay after the calibration, or the uncalibrated Rx time delay is defined as Rx timing error.<br>　　　　• **UE Tx 'timing error group' (UE Tx TEG):** A UE Tx TEG is associated with the transmissions of one or more UL SRS resources for the positioning purpose, which have the Tx timing errors within a certain margin.<br>　　　　• **TRP Tx 'timing error group' (TRP Tx TEG):** A TRP Tx TEG is associated with the transmissions of one or more DL PRS resources, which have the Tx timing errors within a certain margin.<br>　　　　• **UE Rx 'timing error group' (UE Rx TEG):** A UE Rx TEG is associated with one or more DL measurements, which have the Rx timing errors within a certain margin.<br>　　　　• **TRP Rx 'timing error group' (TRP Rx TEG):** A TRP Rx TEG is associated with one or more UL measurements, which have the Rx timing errors within a margin. |

(continued)

• **UE RxTx 'timing error group' (UE RxTx TEG):** A UE RxTx TEG is associated with one or more UE Rx-Txtime difference measurements, and one or more UL SRS resources for the positioning purpose, which have the 'Rx timing errors+Tx timing errors' within a certain margin.
• **TRP RxTx 'timing error group' (TRP RxTx TEG):** A TRP RxTx TEG is associated with one or more gNB Rx-Tx time difference measurements and one or more DL PRS resources, which have the 'Rx timing errors+Tx timing errors' within a certain margin.

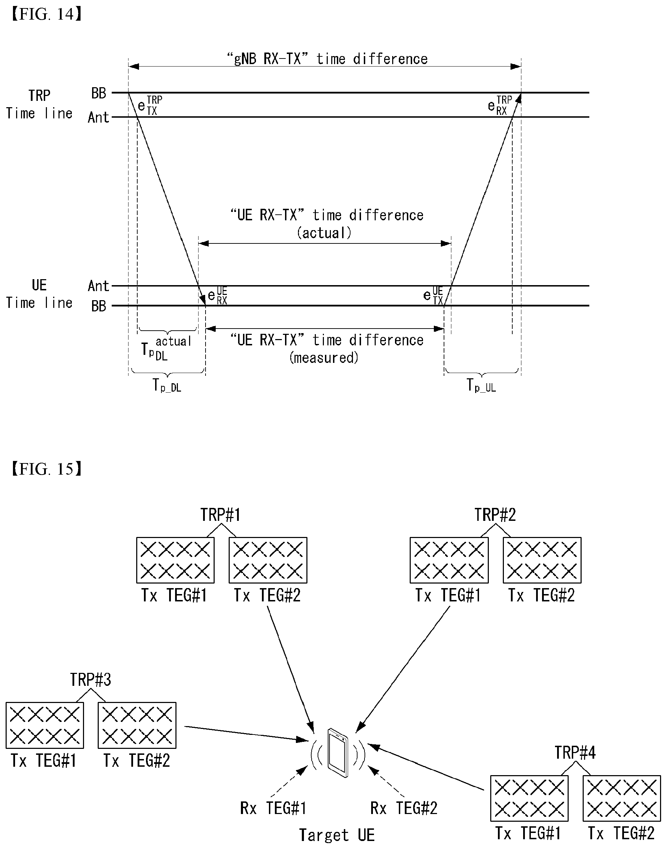

A timing error and a measurement time window are described in detail below with reference to FIG. 15.

To discuss details of the timing error and the measurement time window, a multi-RTT scenario will be taken as an example. FIG. 14 illustrates an example of RTT considering a timing error at a UE and a TRP where the same propagation time of UL and DL is assumed.

Referring to FIG. 14, when four TRPs are assumed, the RTT between the UE and each TRP among the four TRPs may be expressed as Equation 5 below.

【Equation 5】

$$RTT^1 = 2 \times T_p^{TRP1} + (e_{Tx}^{TRP1} + e_{Rx}^{TRP1}) + (e_{Tx}^{UE} + e_{Rx}^{UE})$$

$$RTT^2 = 2 \times T_p^{TRP2} + (e_{Tx}^{TRP2} + e_{Rx}^{TRP2}) + (e_{Tx}^{UE} + e_{Rx}^{UE})$$

$$RTT^3 = 2 \times T_p^{TRP3} + (e_{Tx}^{TRP3} + e_{Rx}^{TRP3}) + (e_{Tx}^{UE} + e_{Rx}^{UE})$$

$$RTT^4 = 2 \times T_p^{TRP4} + (e_{Tx}^{TRP4} + e_{Rx}^{TRP4}) + (e_{Tx}^{UE} + e_{Rx}^{UE})$$

In the above Equation 5, $RTT_i$ is RTT between the UE and TRP#i, $T_p^{TRPi}$ is DL/UL propagation time between the UE and TRP#i, $e_{Tx}^{TRPi}$ is a TX timing error at TRP#i, $e_{Rx}^{TRPi}$ is an RX timing error at TRP#i, $e_{Tx}^{UE}$ is a TX timing error at the UE, and $e_{Rx}^{UE}$ is an RX timing error at the UE.

For the above Equation 5, the result of the subtraction between one RTT (e.g., $RTT^1$) and another RTT (e.g., $RTT^2$) may be expressed as Equation 6 below.

【Equation 6】

$$RTT^1 - RTT^2 = 2 \times T_p^{TRP1} - 2 \times T_p^{TRP2} + (e_{Tx}^{TRP1} + e_{Rx}^{TRP1}) - (e_{Tx}^{TRP2} + e_{Rx}^{TRP2})$$

$$RTT^3 - RTT^2 = 2 \times T_p^{TRP3} - 2 \times T_p^{TRP2} + (e_{Tx}^{TRP3} + e_{Rx}^{TRP3}) - (e_{Tx}^{TRP2} + e_{Rx}^{TRP2})$$

$$RTT^4 - RTT^2 = 2 \times T_p^{TRP4} - 2 \times T_p^{TRP2} + (e_{Tx}^{TRP4} + e_{Rx}^{TRP4}) - (e_{Tx}^{TRP2} + e_{Rx}^{TRP2})$$

In the above Equation 6, the term of UE Tx/Rx timing error effect is eliminated. It can be seen from the above results that the performance of timing measurement can be improved if the TX/RX timing error at the TRP is known. For this reason, the introduction of a reference device (e.g., reference UE) may be considered.

The reference device should guarantee the accuracy and precision for measurement results. The accuracy and precision of measurement results are closely related to changes in the position during pre-survey. The probability of improving the accuracy and precision can be increased if the mobility and/or rotation of the reference device are/is small during the pre-survey.

In general, since the gNB and the UE that are currently discussed as the reference device have different characteristics of mobility, associated behavior and reporting contents and/or LPP(a) messages may be different. Thus, separate configuration/definition may be required depending on whether the reference device is the UE or the TRP. For the reference UE, the subject of the decision of the reference UE can be UE itself or LMF. The relevant procedure and information (message) may vary depending on the subject of the decision of the reference UE as follows.

Case #1

Whether the UE corresponds to the reference UE may be decided by UE itself.

In case of a UE-based mode which allows the UE to calculate its own location, the UE may be possible to determine itself as a reference device based on measured information. In that case, the UE needs to provide LMF with information about whether or not the UE has capability of the reference UE through a capability message (capability information).

Additionally, other information required to determine the reference UE may be provided from the LMF (and/or gNB) or it may be based on a predefined rule. Based on the information configured to determine the reference UE, various procedures may be assumed. For example, the LMF or the gNB may configure the variance of UE location and the required measurement duration (window) that satisfies it. The UE determines for itself as a reference device when the requirement is satisfied. Specifically, the UE may determine for itself as a reference UE if the location of the UE does not exceed a designated maximum amount of change within a given time. The above condition information may be broadcasted through system information, or UE-specifically transmitted via RRC or MAC CE, or transmitted through the LPP message.

A value for time related to change in the location of the UE may be dynamically configured or defined based on a specific rule.

For example, the value for time (e.g., time duration) related to the location change of the UE may be defined as time from the time, at which a request (or report) for the previous positioning measurement is received from the LMF/TRP (or transmitted to the LMF/TRP), to the time at which a request (or report) for the positioning measurement at the current time is received from the LMF/TRP (or transmitted to the LMF/TRP). In other words, a time duration for the decision of the reference UE may be defined as a time duration from the time, at which a request for the previous positioning measurement is received, to the time at which a request for the next positioning measurement is received. Alternatively, a time duration for the decision of the reference UE may be defined as a time duration from the time, at which a report of the previous positioning measurement is transmitted, to the time at which a report of the next positioning measurement is transmitted.

For example, the value for time (e.g., time duration) related to the location change of the UE may be defined as a duration from the time, at which condition information for the decision of the reference UE is received, to x symbol/slot/frame.

As above, the value for time related to the location change of the UE may be i) defined as a specific time duration, or ii) mean a duration from the time, at which condition information related to the determination of the reference UE is received, to a certain time (x symbol/slot/frame).

In case of a UE operating in a UE-assisted mode, the UE cannot measure its own location. Therefore, configuration considering this may be necessary. In the UE-assisted mode, the condition information related to the determination of the reference UE may be defined as a received signal strength including at least one of RSRP, RSRQ and/or RSSI. This is because if change in reception performance is small, the location change of the UE can be judged to be small.

For example, the condition information related to the determination of the reference UE may include information for the maximum change amount for the received signal strength (change amount for at least one of RSRP, RSRQ and/or RSSI). The maximum change amount for the received signal strength may be configured for the UE operating in the UE-assisted mode, and the condition information related to the determination of the reference UE including the maximum change amount for the received signal strength may be received from the BS/LMF.

The parameters described above may be transmitted (configured) singly or in plural.

The UE may decide a signal strength acquired from other DL channel (PDSCH, PDCCH) as well as the reference signal and determine for itself whether it corresponds to the reference UE. After the time at which the UE determines that it corresponds to the reference UE, the UE may transmit information representing, that it is the reference UE, separately from reporting of the positioning measurement. Specifically, when the UE responds to the request for the positioning measurement requested to the BS (TRP)/LMF, the UE may transmit separately/together information representing that a result value transmitted at the same time as the information representing, that the UE is the reference UE, has reliability.

Case #2

Whether the UE corresponds to the reference UE may be decided by the position server LMF.

Regarding the LMF, the LMF may directly determine the reference UE based on the location information obtained from each UE. The detailed configuration related to the determination of the reference UE may depend on LMF implementation. Furthermore, since the detailed procedure for the reference UE does not seem to be different from that of normal UEs, it may not be necessary to discuss about this in detail.

As described in the Case #1, it may be assumed that the UE is configured with condition information including a maximum change value of the received signal strength, a request duration, and/or a maximum change value of movement, or the like. Based on the condition information, the UE may monitor whether conditions for the determination of the reference UE are satisfied. If the conditions for the determination of the reference UE are satisfied, the UE may inform the LMF/gNB that the conditions have been satisfied (i.e., the UE may transmit, to the LMF/gNB, information representing that the conditions have been satisfied). The UE may also transmit triggering for the positioning measurement to the LMF/gNB. The base station may indicate the positioning measurement to determine whether the UE can be the reference device from that point in time and may obtain a result for the positioning measurement from the UE. Based on the acquired measurement information, the LMF may determine whether the UE corresponds to the reference UE.

Regarding reporting contents, it is necessary to clarify whether the LPP message from the normal UE to the LMF is the same for the reference UE.

For example, in order to prevent the case where the gNB does not know information of a specific reference UE that determines the gNB itself as a reference device, the reference UE may indicate whether or not it is the reference device. That is, information for the measurement of PRS reported by the UE may include information representing whether the UE corresponds to the reference UE. Alternatively, the information representing whether the UE corresponds to the reference UE may be reported to the TRP/LMF separately from the information for the measurement of PRS.

For example, the reference UE may provide additional information such as Tx/Rx TEG of the TRP. In addition, the reporting periodicity may also vary depending on the reporting elements. The information for the measurement of PRS reported by the UE may include additional information such as Tx/Rx TEG of the TRP. Alternatively, the additional information such as Tx/Rx TEG of the TRP may be reported to the TRP/LMF separately from the information for the measurement of PRS. The additional information is described in detail below.

If the reference UE can additionally measure reporting contents according to the following i) to v), information for the results can be transmitted to the location server (LMF) through the measurement report.

The additionally reported information may include at least one of the following i) to v).

i) Multi-RTT: UE's reporting of $\left(e_{TX}^{TRPi} + e_{RX}^{TRPi}\right) - \left(e_{TX}^{TRPj} + e_{RX}^{TRPj}\right)$

If multi-RTT is used in a positioning measurement method, a value obtained by subtracting a Tx timing error and an Rx timing error of any one TRP (TRP #j) from a Tx timing error and an Rx timing error of another TRP (TRP #i) may be additionally reported.

ii) DL-TDOA: UE's reporting of $RSTD^{ij} = T_p^{TRPi} - T_p^{TRPj} + e_{TX}^{TRPi} - e_{TX}^{TRPj}$

If DL-TDOA is used in the positioning measurement method, a value obtained by subtracting a propagation time ( $T_p^{TRPj}$ ) and a Tx timing error ( $e_{TX}^{TRPj}$ ) of any one TRP (TRP #j) from a propagation time ( $T_p^{TRPi}$ ) and a Tx timing error ( $e_{TX}^{TRPi}$ ) of another TRP (TRP #i) may be additionally reported.

iii) UL-TDOA: gNB's reporting of $RTOA^{ij} = T_p^{TRPi} - T_p^{TRPj} + e_{RX}^{TRPi} - e_{RX}^{TRPj}$

If UL-TDOA is used in the positioning measurement method, a value obtained by subtracting a propagation time ( $T_p^{TRPj}$ ) and an Rx timing error ( $e_{RX}^{TRPj}$ ) of any one TRP (TRP #j) from a propagation time ( $T_p^{TRPi}$ ) and an Rx timing error ( $e_{RX}^{TRPi}$ ) of another TRP (TRP #i) may be additionally reported.

iv) Timing error between Tx TEGs of a single TRP

The Tx TEG of the TRP may be based on the definition of TRP Tx TEG in Table 14.

The reference UE may measure $\alpha = T_p^{TRPi} + e_{TX\_TEG1}^{TRPi}$ and $\beta = T_p^{TRPi} + e_{TX\_TEG2}^{TRPi}$ and may report $\alpha - \beta = e_{TX_{TEG1}}^{TRP1} - e_{TX\_TEG2}^{TRP1}$. The value may be an absolute value as above and may be a relative value per Tx TEG. Alternatively, if a table in which a value range is defined per TEG is pre-configured/predefined, the UE may transmit an index of the table matched (mapped) to the corresponding value. This is because the TEG itself is classified by the range, and there is a gain in terms of signaling overhead when the corresponding index value is used.

v) Timing error between Rx TEGs of a single UE

The Rx TEG of the UE may be based on the definition of UE Rx TEG in Table 14.

The value may be an absolute value as above and may be a relative value per Rx TEG. Alternatively, if a table in which a value range is defined per Rx TEG is preconfigured/predefined, the UE may transmit an index of the table matched (mapped) to the corresponding value. This is because the TEG itself is classified by the range, and there is a gain in terms of signaling overhead when the corresponding index value is used.

In the above i) to v), i and j each denote an index of the TRP, and $e_{TX_{TEG1}}^{TRPi}$ represents a timing error for TxTEG#1 of TRP i.

For example, the UE may continue to monitor the above values (i.e., the above i) to v)) and report information including the corresponding value (at least one of the i) to v)) to the gNB/LMF if the monitored value satisfies a configured event.

For example, the UE may acquire periodicity information for the report from the gNB or the LMF and periodically transmit information including at least one of the i) to v) to the gNB/LMF.

For example, the UE may transmit a result of measurement for at least one of the i) to v) to the gNB/LMF based on an indication for measurement of the corresponding value (at least one of the i) to v)). That is, the UE may aperiodically report the measurement result for at least one of the i) to v) based on an indication received from the gNB/LMF. The measurement result may be transmitted in a bitmap form and may include single or multiple measurement results.

For the measured TRP and TEG, the reference UE may transmit not only the measurement result but also an identification factor to the gNB/LMF.

Matters related to synchronization error extraction based on the operation of the reference device are described below.

The reference device can compare a differential RTT value with RSTD + ROTA value and perform sync error extraction. This is described in detail below.

A reference signal timing difference (RSTD) between TRP#1 and TRP#2 is as follows.

$$RSTD^{12} = T_p^{TRP1} - T_p^{TRP2} + e_{TX}^{TRP1} - e_{TX}^{TRP2} + \Delta_{\text{sync}}$$

Relative time of arrival (RTOA) between TRP#1 and TRP#2 is as follows.

$$RTOA^{12} = T_p^{TRP1} - T_p^{TRP2} + e_{RX}^{TRP1} - e_{RX}^{TRP2} + \Delta_{\text{sync}}$$

The reference device may obtain UE Rx-Tx/RSTD measurement at the same specific time duration or the same measurement averaging/acquisition window and report it to the location server.

gNB Rx-Tx/RTOA measurement for the reference device may be obtained at the same specific time duration or the same measurement averaging/acquisition window, and may be reported to the location server.

FIG. 15 illustrates timing measurement using different Rx/Tx TEGs at a UE and a TRP. More specifically, FIG. 15 illustrates a scenario when the above-described TEG is applied, and each of Rx/Tx TEG for both the UE and the TRP may be changed depending on measurement time.

Referring to FIG. 15, even if a UE allows a measurement result to be reported through multiple methods within a configured measurement time window, the measurement result may include multiple result values obtained through different Rx/Tx TEGs at both the UE and a TRP. In this respect, a motivation for introducing the measurement time window may be ambiguous. That is, even if the measurement time window is configured, improvement in measurement accuracy may not be guaranteed.

To solve the above-mentioned problem, the configuration of some additional rules or signals may be considered.

For example, a rule for guaranteeing the same Rx/Tx TEG at both the UE and the TRP within the measurement time window may be configured. For example, a TEG ID or value (e.g., timing margin or offset) may be included in the measurement report, or separate signaling for reporting the corresponding information (e.g., the TEG ID/timing margin or offset) may be defined.

In addition, based on information received from a reference UE or a reference TRP, resource configuration (e.g., configuration of SRS for positioning or configuration of PRS resource) may be performed.

For example, an LMF may perform configuration of SRS for positioning or configuration of PRS resource based on the information received from the reference UE (or the reference TRP).

For example, the LMF may give priority to configuration information for a TRP acquiring a timing error over configuration information for a normal TRP, and may perform the above-described configuration (SRS/PRS related configuration). The LMF may transmit a factor, that distinguishes the TRP acquiring the timing error and the normal TRP, by including the factor upon a positioning measurement request.

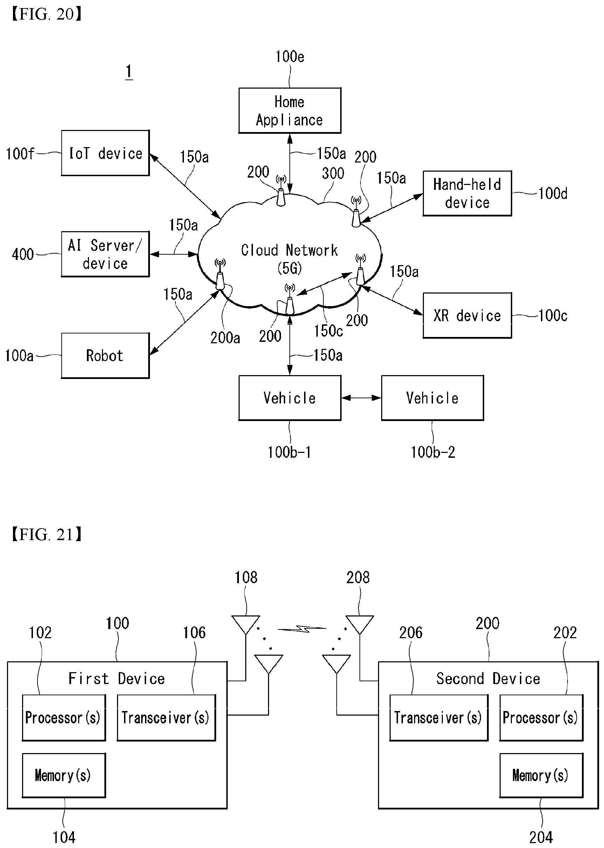

In terms of implementation, the operations (e.g., operations related to the positioning measurement) of the UE/BS/location server according to the above-described embodiments may be processed by a device of FIGS. 20 to 24 (e.g., processors 102 and 202 of FIG. 21) to be described below.

Further, the operations (e.g., operations related to the positioning measurement) of the UE/BS/location server according to the above-described embodiments may be stored in a memory (e.g., 104 and 204 of FIG. 21) in the form of commands/programs (e.g., instructions, executable codes) for running at least one processor (e.g., 102 and 202 of FIG. 21).

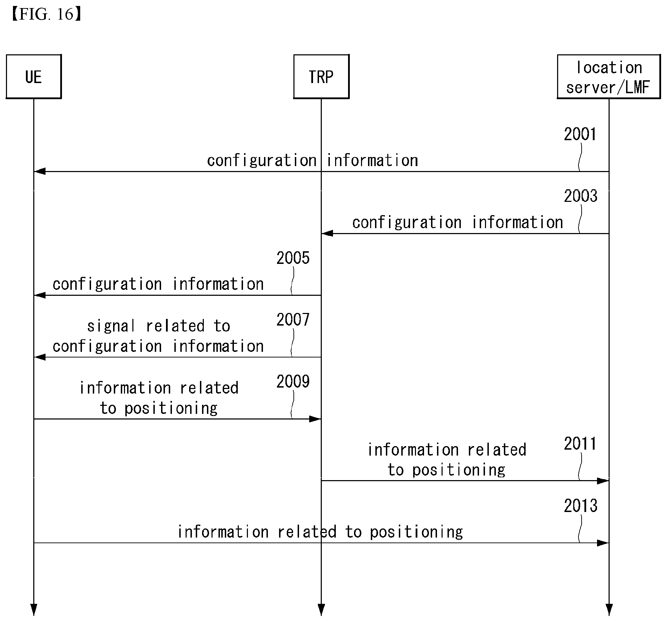

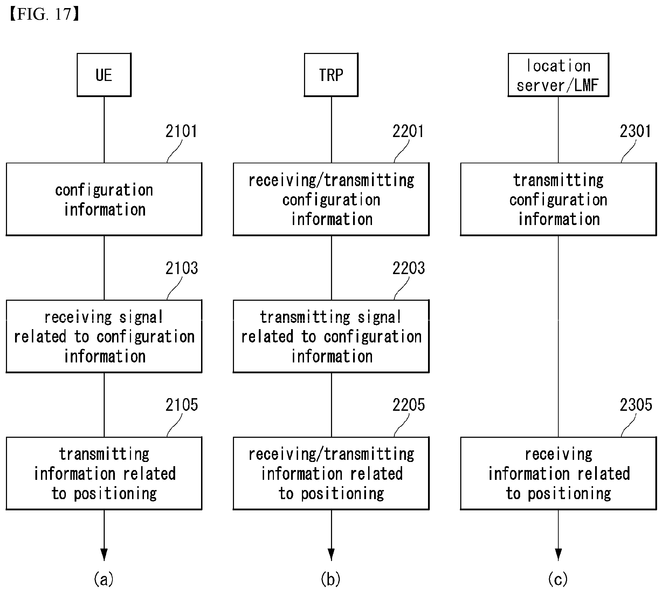

Hereinafter, operations of a UE, a base station (TRP), and a location server (LMF) to which the above-described embodiments can be combined and applied will be described in detail with reference to FIGS. 16 and 17.

FIG. 16 is a diagram illustrating operations of a UE, TRP, and LMF to which a method proposed in the present disclosure can be applied.

Referring to FIG. 16, in operation 2001 according to an exemplary embodiment, the location server and/or the LMF may transmit configuration information to the UE, and the UE may receive it.

Meanwhile, in operation 2003 according to an exemplary embodiment, the location server and/or the LMF may transmit reference configuration information to a transmission and reception point (TRP), and the TRP may receive it. In operation 2005 according to an exemplary embodiment, the TRP may transmit reference configuration information to the UE, and the UE may receive it. In this case, the operation 2001 according to the exemplary embodiment may be omitted.

Conversely, the operations 2003 and 2005 according to an exemplary embodiment may be omitted. In this case, the operation 2001 according to the exemplary embodiment may be performed.

That is, the operations 2001 according to an exemplary embodiment and the operations 2003 and 2005 according to an exemplary embodiment may be optional.

In operation 2007 according to an exemplary embodiment, the TRP may transmit a signal related to configuration information to the UE, and the UE may receive it. For example, the signal related to the configuration information may be a signal for positioning of the UE.

In operation 2009 according to an exemplary embodiment, the UE may transmit a signal related to positioning to the TRP, and the TRP may receive it. In operation 2011 according to an exemplary embodiment, the TRP may transmit the signal related to positioning to the location server and/or the LMF, and the location server and/or the LMF may receive it.

Meanwhile, in operation 2013 according to an exemplary embodiment, the UE may transmit the signal related to positioning to the location server and/or the LMF, and the location server and/or the LMF may receive it. In this case, operations 2009 and 2011 according to the exemplary embodiment may be omitted.

Conversely, operation 2013 according to an exemplary embodiment may be omitted. In this case, operations 2009 and 2011 according to the exemplary embodiment may be performed.

That is, operations 2009 and 2011 according to an exemplary embodiment and operations 2013 according to an exemplary embodiment may be optional.

In an exemplary embodiment, the signal related to positioning may be obtained based on the configuration information and/or the signal related to the configuration information.

FIG. 17 is a flowchart for explaining an operation of each UE, TRP and LMF to which a method proposed in the present disclosure can be applied.

Referring to (a) of FIG. 17, in operation 2101 according to an exemplary embodiment, the UE may receive configuration information. In operation 2103 according to an exemplary embodiment, the UE may receive a signal related to configuration information. In operation 2105 according to an exemplary embodiment, the UE may transmit information related to positioning.

Referring to (b) of FIG. 17, in operation 2201 according to an exemplary embodiment, the TRP may receive configuration information from the location server and/or the LMF, and may transmit it to the UE. In operation 2203 according to an exemplary embodiment, the TRP may transmit the signal related to configuration information. In operation 2205 according to an exemplary embodiment, the TRP may receive information related to positioning, and may transmit it to the location server and/or the LMF.

Referring to (c) of FIG. 17, in operation 2301 according to an exemplary embodiment, the location server and/or the LMF may transmit the configuration information. In operation 2305 according to an exemplary embodiment, the location server and/or the LMF may receive the information related to positioning.

More specific operations, functions, terms, etc. in the operation according to each exemplary embodiment may be performed and described in combination with at least one of the various embodiments described above and the embodiments to be described later.

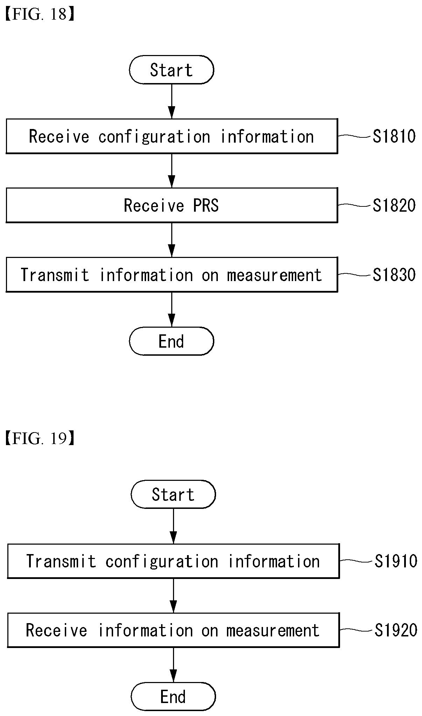

Hereinafter, the above-described embodiments (FIGS. 7 to 17) will be described in detail with reference to FIG. 18 in terms of the operation of the UE. Methods to be described below are divided for convenience of description, unless mutually excluded, and of course, some components of any one method may be substituted with some components of another method, or may be applied in combination with each other.

FIG. 18 is a flowchart illustrating a method for a UE to transmit information on measurement of PRS in a wireless communication system according to an embodiment of the present disclosure.

Referring to FIG. 18, a method for a UE to transmit information on measurement of a Positioning Reference Signal (PRS) in a wireless communication system according to an embodiment of the present disclosure may include receiving configuration information related to the PRS (S1810), receiving the PRS (S1820), and transmitting the information on measurement of the PRS (51830).

In S1810, the UE receives the configuration information related to the PRS from the location server. For example, the location server may refer to a Location Management Function (LMF) of FIG. 7. The S1810 may be based on the operation according to 2001 or 2003 and 2005 of FIG. 16 and the operation 2101 of FIG. 17. That is, the configuration information related to the PRS may be i) directly transmitted from the location server to the UE, or ii) transmitted from the location server to the UE through the base station (TRP).

For example, the configuration information related to the PRS may include a DL PRS resource set and/or a DL-PRS-Resource, which are higher layer parameters based on Table 7 above. However, the present disclosure is not limited thereto, and the configuration information related to the PRS may further include other higher layer parameters defined in Table 7 above.

According to an embodiment, the configuration information related to the PRS may include information on a PRS resource set. The information on the PRS resource set may include one or more PRS resource sets. The PRS resource set may include one or more PRS resources. The information on the PRS resource set may be based on the DL PRS resource set configuration of Table 7 above.

According to an embodiment, signaling (S1810) between the UE and the location server may be performed based on a protocol for positioning. For example, the configuration information related to the PRS may be received based on an LTE Positioning Protocol (LPP).

Based on S1810 described above, the operation of the UE (100/200 in FIGS. 20 to 24) receiving the configuration information related to the PRS from the location server (100/200 in FIGS. 20 to 24) may be implemented by the device of FIGS. 20 to 24. For example, referring to FIG. 21, the one or more processors 102 may control one or more transceivers 106 and/or one or more memories 104 to receive the configuration information related to the PRS from the location server 200.

In S1820, the UE receives the PRS from the base station. For example, the base station may be based on a reference source (e.g. a transmission and reception point (TRP)) of FIG. 7, and the PRS may be based on the radio signals of FIG. 7. The S1820 may be based on the operation according to 2007 of FIG. 16, and the operation 2103 of FIG. 17. The reception of the PRS may be performed as defined in Tables 6 and 7 above.

Based on S1820 described above, the operation of the UE (100/200 in FIGS. 20 to 24) receiving the PRS from the base station (100/200 in FIGS. 20 to 24) may be implemented by the device of FIGS. 20 to 24. For example, referring to FIG. 21, the one or more processors 102 may control one or more transceivers 106 and/or one or more memories 104 to receive the PRS from base station 200.

In S1830, the UE transmits information on the measurement of the PRS to the location server. The S1830 may be based on the operation according to 2009, 2011, or 2013 of FIG. 16 and the operation 2105 of FIG. 17. That is, the information on the measurement of the PRS may be i) transmitted directly from the UE to the location server, or ii) transmitted from the UE to the location server through the base station (TRP).

Transmission of information on the measurement of the PRS may be performed as defined in Table 7 above. For example, the information on the measurement of the PRS may include a Reference Signal Time Difference (RSTD) related to the PRS and/or a Reference Signal Received Power (RSRP) related to the PRS.

According to an embodiment, information for the measurement of the PRS may include information representing whether the UE is a reference UE. The present embodiment may be based on Case #1 related to the determination of the reference UE described above.

Whether the UE is the reference UE may be determined based on condition information related to the determination of the reference UE.

The condition information related to the determination of the reference UE may include information for at least one of i) a maximum change amount of a received signal strength, ii) a maximum movement change amount, and/or iii) a specific time duration.

The information included in the condition information related to the determination of the reference UE may vary depending on an operation mode of the UE related to a positioning.

For example, based on the UE operating in a UE-based mode in which the UE can determine its own location, the condition information related to the determination of the reference UE may include information for the maximum change amount. The condition information related to the determination of the reference UE may further include information for the maximum change amount of the received signal strength and/or information for the specific time duration.

For example, based on the UE operating in a UE-assisted mode in which the UE cannot determine its own location, the condition information related to the determination of the reference UE may include information for the maximum change amount of the received signal strength. The condition information related to the determination of the reference UE may further include information for the specific time duration.

The specific time duration may be determined based on the condition information related to the determination of the reference UE. The specific time duration may be determined based on a time related to the operation of the UE.

For example, the specific time duration may be determined based on a reception time of the condition information related to the determination of the reference UE and a preset value (e.g., x symbol/slot/subframe).

For example, the specific time duration may be determined based on a transmission time of the information for the measurement of the PRS and a previous transmission time of the information for the measurement of the PRS.

For example, the specific time duration may be determined based on a reception time of a request message for the measurement of the PRS and a previous reception time of the request message for the measurement of the PRS.

That is, the condition information related to the determination of the reference UE may include a value (e.g., the x symbol/slot/subframe) for the determination of the specific time duration and/or information for a reference time (e.g., information transmission time for the PRS measurement, the reception time of the request message for the PRS measurement, etc.) for the determination of the specific time duration.

The UE may be determined as the reference UE based on the condition information related to the determination of the reference UE.

For example, based on a change amount of the received signal strength during the specific time duration being lower than the maximum change amount of the received signal strength, the UE may be determined as the reference UE. In this instance, the UE may be a UE operating in the UE-assisted mode or the UE-based mode.

For example, based on a movement change amount of the UE during the specific time duration being lower than the maximum movement change amount, the UE may be determined as the reference UE. In this instance, the UE may be a UE operating in the UE-based mode.

The condition information related to the determination of the reference UE may be configured based on an RRC message, a medium access control-control element (MAC-CE), or an LTE Positioning Protocol (LPP) message. For example, the condition information related to the determination of the reference UE may be transmitted from the base station to the UE based on the RRC message or the MAC-CE. For example, the condition information related to the determination of the reference UE may be transmitted from the location server to the UE based on the LPP message.

According to an embodiment, based on the UE being determined as the reference UE, the information for the measurement of the PRS may further include additional information related to at least one of a timing error related to the base station, a propagation time related to the base station, and/or a timing error group (TEG) related to the base station. The additional information may include reporting contents based on at least one of the i) to v) in the above-described Case #1.

The timing error related to the base station may include a transmit (Tx) timing error and/or a receive (Rx) timing error at TRP(s) related to the base station.

The propagation time related to the base station may include a propagation time at TRP(s) related to the base station.

The timing error group related to the base station may include a Tx TEG and/or an Rx TEG at TRP(s) related to the base station.

Based on an embodiment, signaling (S1830) between the UE and the location server may be performed based on a protocol for positioning. For example, the information on the measurement of the PRS may be transmitted based on an LTE Positioning Protocol (LPP).

Based on S1830 described above, the operation of the UE (100/200 in FIGS. 20 to 24) transmitting information on the measurement of the PRS to the location server (100/200 in FIGS. 20 to 24) may be implemented by the device of FIGS. 20 to 24. For example, referring to FIG. 21, the one or more processors 102 may control one or more transceivers 106 and/or one or more memories 104 to transmit the information on the measurement of the PRS to the location server 200.

The method may further include transmitting capability information before the S1810. Specifically, the UE may transmit, to the location server, the capability information representing whether the UE is able to operate as the reference UE.

Based on the capability information transmission, the operation of the UE (100/200 in FIGS. 20 to 24) transmitting, to the location server (100/200 in FIGS. 20 to 24), the capability information representing whether the UE is able to operate as the reference UE may be implemented by the device of FIGS. 20 to 24. For example, referring to FIG. 21, the one or more processors 102 may control one or more transceivers 106 and/or one or more memories 104 to transmit, to the location server 200, the capability information representing whether the UE is able to operate as the reference UE.

Hereinafter, the above-described embodiments (FIGS. 7 to 17) will be described in detail with reference to FIG. 19 in terms of the operation of the location server. Methods to be described below are divided for convenience of description, unless mutually excluded, and of course, some components of any one method may be substituted with some components of another method, or may be applied in combination with each other.

FIG. 19 is a flowchart illustrating a method for a location server to receive information on measurement of PRS in a wireless communication system according to another embodiment of the present disclosure.

Referring to FIG. 19, a method for a location server to receive information on measurement of a Positioning Reference Signal (PRS) in a wireless communication system according to another embodiment of the present disclosure may include transmitting configuration information related to the PRS (S1910) and receiving information on the measurement of the PRS (S1920).

In S1910, the location server transmits the configuration information related to the PRS to the UE. For example, the UE may refer to the target device of FIG. 7. The S1910 may be based on the operation according to 2001 or 2003 and 2005 of FIG. 16 and the operation 2301 of FIG. 17. That is, the configuration information related to the PRS may be i) directly transmitted from the location server to the UE, or ii) transmitted from the location server to the UE through the base station (TRP).

The PRS is transmitted from the base station to the UE. For example, the base station may be based on a reference source (e.g. a transmission and reception point (TRP)) of FIG. 7, and the PRS may be based on the radio signals of FIG. 7. Transmission of the PRS by the base station may be performed as defined in Tables 6 and 7 above.

For example, the configuration information related to the PRS may include a DL PRS resource set and/or a DL-PRS-Resource, which are higher layer parameters based on Table 7 above. However, present disclosure is not limited thereto, and the configuration information related to the PRS may further include other higher layer parameters defined in Table 7 above.

According to an embodiment, the configuration information related to the PRS may include information on a PRS resource set. The information on the PRS resource set may include one or more PRS resource sets. The PRS resource set may include one or more PRS resources. The information on the PRS resource set may be based on the DL PRS resource set configuration of Table 7 above.

Base on an embodiment, signaling (S1910) between the location server and the UE may be performed based on a protocol for positioning. For example, the configuration information related to the PRS may be transmitted based on an LTE Positioning Protocol (LPP).

Base on S1910 described above, the operation of the location server (100/200 in FIGS. 20 to 24) transmitting the configuration information related to the PRS to the UE (100/200 in FIGS. 20 to 24) may be implemented by the device of FIGS. 20 to 24. For example, referring to FIG. 21, the one or more processors 202 may control one or more transceivers 206 and/or one or more memories 204 to transmit the configuration information related to the PRS to the UE 100.

In S1920, the location server receives information on the measurement of the PRS from the UE. The S1920 may be based on the operation according to 2009, 2011, or 2013 of FIG. 16 and the operation 2305 of FIG. 17. That is, the information on the measurement of the PRS may be i) transmitted directly from the UE to the location server, or ii) transmitted from the UE to the location server through the base station (TRP).

Reception of information on the measurement of the PRS may be performed as defined in Table 7 above. For example, the information on the measurement of the PRS may include a Reference Signal Time Difference (RSTD) related to the PRS and/or a Reference Signal Received Power (RSRP) related to the PRS.

According to an embodiment, information for the measurement of the PRS may include information representing whether the UE is a reference UE. The present embodiment may be based on Case #1 related to the determination of the reference UE described above.

Whether the UE is the reference UE may be determined based on condition information related to the determination of the reference UE.

The condition information related to the determination of the reference UE may include information for at least one of i) a maximum change amount of a received signal strength, ii) a maximum movement change amount, and/or iii) a specific time duration.

The information included in the condition information related to the determination of the reference UE may vary depending on an operation mode of the UE related to a positioning.

For example, based on the UE operating in a UE-based mode in which the UE can determine its own location, the condition information related to the determination of the reference UE may include information for the maximum change amount. The condition information related to the determination of the reference UE may further include information for the maximum change amount of the received signal strength and/or information for the specific time duration.

For example, based on the UE operating in a UE-assisted mode in which the UE cannot determine its own location, the condition information related to the determination of the reference UE may include information for the maximum change amount of the received signal strength. The condition information related to the determination of the reference UE may further include information for the specific time duration.

The specific time duration may be determined based on the condition information related to the determination of the reference UE. The specific time duration may be determined based on a time related to the operation of the UE.

For example, the specific time duration may be determined based on a reception time of the condition information related to the determination of the reference UE and a preset value (e.g., x symbol/slot/subframe).

For example, the specific time duration may be determined based on a transmission time of the information for the measurement of the PRS and a previous transmission time of the information for the measurement of the PRS.

For example, the specific time duration may be determined based on a reception time of a request message for the measurement of the PRS and a previous reception time of the request message for the measurement of the PRS.

That is, the condition information related to the determination of the reference UE may include a value (e.g., the x symbol/slot/subframe) for the determination of the specific time duration and/or information for a reference time (e.g., information transmission time for the PRS measurement, the reception time of the request message for the PRS measurement, etc.) for the determination of the specific time duration.

The UE may be determined as the reference UE based on the condition information related to the determination of the reference UE.

For example, based on a change amount of the received signal strength during the specific time duration being lower than the maximum change amount of the received signal strength, the UE may be determined as the reference UE. In this instance, the UE may be a UE operating in the UE-assisted mode or the UE-based mode.

For example, based on a movement change amount of the UE during the specific time duration being lower than the maximum movement change amount, the UE may be determined as the reference UE. In this instance, the UE may be a UE operating in the UE-based mode.

The condition information related to the determination of the reference UE may be configured based on an RRC message, a medium access control-control element (MAC-CE), or an LTE Positioning Protocol (LPP) message. For example, the condition information related to the determination of the reference UE may be transmitted from the base station to the UE based on the RRC message or the MAC-CE. For example, the condition information related to the determination of the reference UE may be transmitted from the location server to the UE based on the LPP message.

According to an embodiment, based on the UE being determined as the reference UE, the information for the measurement of the PRS may further include additional information related to at least one of a timing error related to the base station, a propagation time related to the base station, and/or a timing error group (TEG) related to the base station. The additional information may include reporting contents based on at least one of the i) to v) in the above-described Case #1.

The timing error related to the base station may include a transmit (Tx) timing error and/or a receive (Rx) timing error at TRP(s) related to the base station.

The propagation time related to the base station may include a propagation time at TRP(s) related to the base station.

The timing error group related to the base station may include a Tx TEG and/or an Rx TEG at TRP(s) related to the base station.

Base on an embodiment, signaling (S1920) between the location server and the UE may be performed based on a protocol for positioning. For example, the information on the measurement of the PRS may be received based on an LTE Positioning Protocol (LPP).

Base on S1920 described above, the operation of the location server (100/200 in FIGS. 20 to 24) receiving information on the measurement of the PRS from the UE (100/200 in FIGS. 20 to 24) may be implemented by the device of FIGS. 20 to 24. For example, referring to FIG. 21, the one or more processors 202 may control one or more transceivers 206 and/or one or more memories 204 to receive the information on the measurement of the PRS from the UE 100.

The method may further include receiving capability information before the S1910. Specifically, the location server may receive, from the UE, the capability information representing whether the UE is able to operate as the reference UE.

Based on the capability information reception, the operation of the location server (100/200 in FIGS. 20 to 24) receiving, from the UE (100/200 in FIGS. 20 to 24), the capability information representing whether the UE is able to operate as the reference UE may be implemented by the device of FIGS. 20 to 24. For example, referring to FIG. 21, the one or more processors 102 may control one or more transceivers 106 and/or one or more memories 104 to receive, from the UE 100, the capability information representing whether the UE is able to operate as the reference UE.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 20 illustrates a communication system 1 applied to the present disclosure.

Referring to FIG. 20, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device applied to the present disclosure

FIG. 21 illustrates wireless devices applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit applied to the present disclosure**

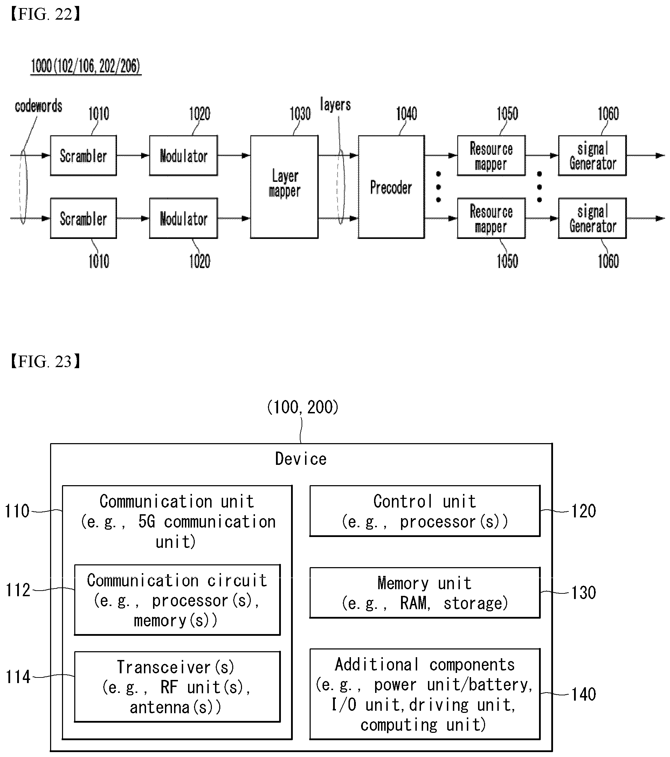

FIG. 22 illustrates a signal process circuit for a transmission signal.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

**Example of application of wireless device applied to the present disclosure**

FIG. 23 illustrates another example of a wireless device applied to the present disclosure.

The wireless device may be implemented in various forms according to a use-case/service (refer to FIG. 20). Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applied to the present disclosure**

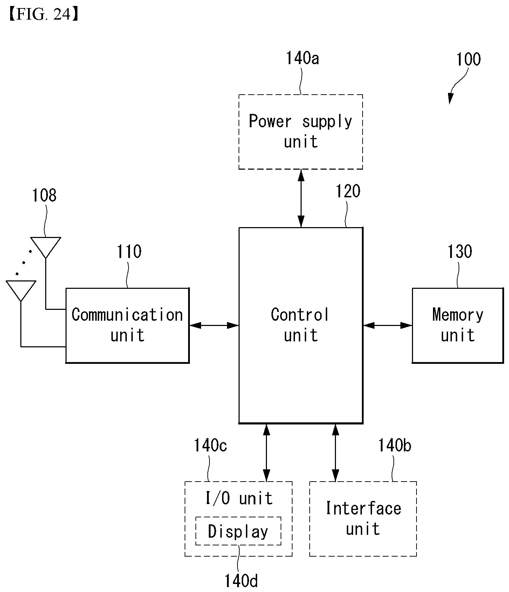

FIG. 24 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Here, the wireless communication technology implemented in the device (FIGS. 20 to 24) of the present disclosure may include LTE, NR, and 6G as well as Narrowband Internet of Things (NB-IoT) for low-power communication. For example, the NB-IoT technology may be an example of a LPWAN (Low Power Wide Area Network) technology, and may be implemented in standards such as LTE Cat NB1 and/or LTE Cat NB2, and is not limited to the above-described name.

Additionally or alternatively, the wireless communication technology implemented in the device (FIGS. 20 to 24) of the present disclosure may perform communication based on the LTE-M technology. For example, the LTE-M technology may be an example of LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M, and is not limited to the above-described name.

Additionally or alternatively, the wireless communication technology implemented in the device (FIGS. 20 to 24) of the present disclosure may include at least one of ZigBee, Bluetooth, and Low Power Wide Area Network (LPWAN) in consideration of low power communication, and is not limited to the above-described name. For example, the ZigBee technology may generate PAN (personal area networks) related to small/low-power digital communication based on various standards such as IEEE 802.15.4, and may be called by various names.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. A method of a user equipment (UE) for transmitting information for a measurement of a positioning reference signal (PRS) in a wireless communication system, the method comprising:

   receiving, from a location server, configuration information related to a positioning reference signal (PRS);
   receiving the PRS from a base station; and
   transmitting, to the location server, information for a measurement of the PRS,
   wherein the information for the measurement of the PRS includes information representing whether the UE is a reference UE.

2. The method of claim 1, wherein whether the UE is the reference UE is determined based on condition information related to a determination of the reference UE.

3. The method of claim 2, wherein the condition information related to the determination of the reference UE includes information for at least one of i) a maximum change amount of a received signal strength, ii) a maximum movement change amount, and/or iii) a specific time duration.

4. The method of claim 3, wherein the specific time duration is determined based on a reception time of the condition information related to the determination of the reference UE and a preset value.

5. The method of claim 3, wherein the specific time duration is determined based on a transmission time of the information for the measurement of the PRS and a previous transmission time of the information for the measurement of the PRS.

6. The method of claim 3, wherein the specific time duration is determined based on a reception time of a request message for the measurement of the PRS and a previous reception time of the request message for the measurement of the PRS.

7. The method of claim 3, wherein based on a change amount of the received signal strength during the specific time duration being lower than the maximum change amount of the received signal strength, the UE is determined as the reference UE.

8. The method of claim 3, wherein based on a movement change amount of the UE during the specific time duration being lower than the maximum movement change amount, the UE is determined as the reference UE.

9. The method of claim 1, further comprising:
   transmitting capability information representing whether the UE is able to operate as the reference UE.

10. The method of claim 2, wherein the condition information related to the determination of the reference UE is configured based on an RRC message, a medium access control-control element (MAC-CE), or an LTE Positioning Protocol (LPP) message.

11. The method of claim 1, wherein based on the UE being determined as the reference UE, the information for the measurement of the PRS further includes additional information related to at least one of a timing error related to the base station, a propagation time related to the base station, and/or a timing error group (TEG) related to the base station.

12. A user equipment (UE) transmitting information for a measurement of a positioning reference signal (PRS) in a wireless communication system, the UE comprising:

   one or more transceivers;
   one or more processors configured to control the one or more transceivers; and
   one or more memories operably connected to the one or more processors,
   wherein the one or more memories are configured to store instructions performing operations based on being executed by the one or more processors,
   wherein the operations comprise:

receiving, from a location server, configuration information related to a positioning reference signal (PRS);

receiving the PRS from a base station; and

transmitting, to the location server, information for a measurement of the PRS,

wherein the information for the measurement of the PRS includes information representing whether the UE is a reference UE.

13. A device controlling a user equipment (UE) to transmit information for a measurement of a positioning reference signal (PRS) in a wireless communication system, the device comprising:

one or more processors; and

one or more memories operably connected to the one or more processors,

wherein the one or more memories are configured to store instructions performing operations based on being executed by the one or more processors,

wherein the operations comprise:

receiving, from a location server, configuration information related to a positioning reference signal (PRS);

receiving the PRS from a base station; and

transmitting, to the location server, information for a measurement of the PRS,

wherein the information for the measurement of the PRS includes information representing whether the UE is a reference UE.

14. One or more non-transitory computer readable mediums storing one or more instructions,

wherein the one or more instructions perform operations based on being executed by one or more processors,

wherein the operations comprise:

receiving, from a location server, configuration information related to a positioning reference signal (PRS);

receiving the PRS from a base station; and

transmitting, to the location server, information for a measurement of the PRS,

wherein the information for the measurement of the PRS includes information representing whether a user equipment (UE) is a reference UE.

15. A method of a location server for receiving information for a measurement of a positioning reference signal (PRS) in a wireless communication system, the method comprising:

transmitting, to a user equipment (UE), configuration information related to the PRS, the PRS being transmitted from a base station to the UE; and

receiving, from the UE, information for a measurement of the PRS,

wherein the information for the measurement of the PRS includes information representing whether the UE is a reference UE.

16. A location server receiving information for a measurement of a positioning reference signal (PRS) in a wireless communication system, the location server comprising:

one or more transceivers;

one or more processors configured to control the one or more transceivers; and

one or more memories operably connected to the one or more processors,

wherein the one or more memories are configured to store instructions performing operations based on being executed by the one or more processors,

wherein the operations comprise:

transmitting, to a user equipment (UE), configuration information related to the PRS, the PRS being transmitted from a base station to the UE; and

receiving, from the UE, information for a measurement of the PRS,

wherein the information for the measurement of the PRS includes information representing whether the UE is a reference UE.

【FIG. 1】

【FIG. 2】

【FIG. 3】

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2, 4, 7} Symbols − ffs

【FIG. 4】

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
-(k, $\bar{l}$) in resource grid
-(k, l) in resource block

k = 0

l = 0

$l = 14 \cdot 2^{\mu} - 1$

【FIG. 5】

ANTENNA PORT A
ANTENNA PORT B } NUMEROLOGY X

ANTENNA PORT A
ANTENNA PORT B } NUMEROLOGY Y

【FIG. 6】

| INITIAL CELL SEARCH | SYSTEM INFORMATION RECEPTION | RANDOM ACCESS PROCEDURE | GENERAL DL/UL Tx/Rx |
|---|---|---|---|

PSS/SSS& [DLRS]& PBCH    PDCCH/PDSCH (BCCH)    PRACH    PDCCH/PDSCH    PUSCH    PDCCH/PDSCH    PDCCH/PDSCH    PUSCH/PUCCH

S701    S702    S703    S704    S705    S706    S707    S708

· DL/UL ACK/NACK
· UE CQI/PMI RI REPORT
  USING PUSCH AND PUCCH

【FIG. 7】

【FIG. 8】

【FIG. 9】

【FIG. 10】

| UE | NR-Uu LTE-Uu | NG RAN | NG-C | AMF | NLs | LMF |

【FIG. 11】

| NG RAN | NG-C | AMF | NLs | LMF |

【FIG. 12】

$\tau_3 \cdot \tau_1$

Measurement uncertainty

$\tau_1$　$\tau_2$

$\tau_3$

BS$_1$

BS$_2$

BS$_3$

$\tau_2 \cdot \tau_1$

【FIG. 13A】

【FIG. 13B】

【FIG. 14】

"gNB RX-TX" time difference

TRP
Time line

BB

$e_{TX}^{TRP}$

Ant

$e_{RX}^{TRP}$

"UE RX-TX" time difference
(actual)

UE
Time line

Ant

$e_{RX}^{UE}$

$e_{TX}^{UE}$

BB

"UE RX-TX" time difference
(measured)

$T_{p\_DL}^{actual}$

$T_{p\_DL}$

$T_{p\_UL}$

【FIG. 15】

TRP#1

Tx TEG#1    Tx TEG#2

TRP#2

Tx TEG#1    Tx TEG#2

TRP#3

Tx TEG#1    Tx TEG#2

Rx TEG#1          Rx TEG#2

Target UE

TRP#4

Tx TEG#1    Tx TEG#2

【FIG. 16】

【FIG. 17】

```
        ┌──────┐              ┌──────┐              ┌─────────────┐
        │  UE  │              │ TRP  │              │  location   │
        └──────┘              └──────┘              │ server/LMF  │
           │                     │                  └─────────────┘
           │         2101        │        2201             │           2301
           │        ╱            │       ╱                 │          ╱
   ┌───────────────┐    ┌─────────────────────┐   ┌──────────────────┐
   │ configuration │    │ receiving/transmitting│   │    transmitting  │
   │  information  │    │     configuration    │   │   configuration  │
   │               │    │     information      │   │    information   │
   └───────────────┘    └─────────────────────┘   └──────────────────┘
           │         2103        │        2203             │           2301
           │        ╱            │       ╱                 │
   ┌───────────────┐    ┌─────────────────────┐            │
   │ receiving signal│  │  transmitting signal │            │
   │related to configuration│ │related to configuration│    │
   │  information  │    │     information      │            │
   └───────────────┘    └─────────────────────┘            │
           │         2105        │        2205             │           2305
           │        ╱            │       ╱                 │          ╱
   ┌───────────────┐    ┌─────────────────────┐   ┌──────────────────┐
   │  transmitting │    │ receiving/transmitting│   │     receiving    │
   │information related│ │ information related │   │information related│
   │ to positioning│    │   to positioning    │   │  to positioning  │
   └───────────────┘    └─────────────────────┘   └──────────────────┘
           │                     │                         │
           ▼                     ▼                         ▼
          (a)                   (b)                       (c)
```

【FIG. 18】

```
          ┌─────────┐
          │  Start  │
          └────┬────┘
               │
               ▼
┌──────────────────────────────────┐
│ Receive configuration information │──S1810
└──────────────┬───────────────────┘
               │
               ▼
┌──────────────────────────────────┐
│          Receive PRS             │──S1820
└──────────────┬───────────────────┘
               │
               ▼
┌──────────────────────────────────┐
│ Transmit information on measurement │──S1830
└──────────────┬───────────────────┘
               │
               ▼
          ┌─────────┐
          │   End   │
          └─────────┘
```

【FIG. 19】

```
          ┌─────────┐
          │  Start  │
          └────┬────┘
               │
               ▼
┌──────────────────────────────────┐
│ Transmit configuration information │──S1910
└──────────────┬───────────────────┘
               │
               ▼
┌──────────────────────────────────┐
│ Receive information on measurement │──S1920
└──────────────┬───────────────────┘
               │
               ▼
          ┌─────────┐
          │   End   │
          └─────────┘
```

【FIG. 20】

【FIG. 21】

【FIG. 22】

1000(102/106, 202/206)

【FIG. 23】

(100, 200)

【FIG. 24】

<div align="center">

**INTERNATIONAL SEARCH REPORT**

</div>

| | International application No. |
|---|---|
| | **PCT/KR2022/004981** |

**A. CLASSIFICATION OF SUBJECT MATTER**

**H04W 64/00**(2009.01)i; **H04W 8/24**(2009.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 64/00(2009.01); G01S 5/02(2010.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위치 서버(location server), 기지국(base station), 참조 단말(reference UE), 포지셔 닝 참조 신호(Positioning Reference Signal, PRS), 설정 정보(setting information), 측정(measurement)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0107975 A (INTEL IP CORPORATION) 26 September 2017 (2017-09-26)<br>See paragraphs [0062] and [0078]-[0079]; and figure 7. | 1-4,10-16 |
| A | | 5-9 |
| Y | WO 2016-032265 A1 (LG ELECTRONICS INC.) 03 March 2016 (2016-03-03)<br>See paragraphs [0089] and [0145]; claim 1; and figure 10. | 1-4,10-16 |
| A | KR 10-2020-0039784 A (HUAWEI TECHNOLOGIES CO., LTD.) 16 April 2020 (2020-04-16)<br>See paragraphs [0040]-[0047]; and figure 4. | 1-16 |
| A | KR 10-2020-0105506 A (CHINA ACADEMY OF TELECOMMUNICATIONS TECHNOLOGY) 07 September 2020 (2020-09-07)<br>See paragraphs [0131]-[0134]; and figure 4. | 1-16 |
| A | INTEL CORPORATION. Remaining Details of DL PRS Design for NR Positioning. R1-1910674, 3GPP TSG RAN WG1 Meeting #98bis. Chongqing, China. 05 October 2019.<br>See section 2. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 July 2022** | **22 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| INTERNATIONAL SEARCH REPORT<br>Information on patent family members | | | | International application No.<br>**PCT/KR2022/004981** | | |

| Patent document<br>cited in search report | | | Publication date<br>(day/month/year) | Patent family member(s) | | | Publication date<br>(day/month/year) |
|---|---|---|---|---|---|---|---|
| KR | 10-2017-0107975 | A | 26 September 2017 | CN | 107113569 | A | 29 August 2017 |
| | | | | CN | 107113569 | B | 27 April 2021 |
| | | | | CN | 107113569 | B9 | 04 June 2021 |
| | | | | CN | 113079470 | A | 06 July 2021 |
| | | | | EP | 3251235 | A1 | 06 December 2017 |
| | | | | EP | 3251235 | A4 | 26 September 2018 |
| | | | | EP | 3251235 | B1 | 24 March 2021 |
| | | | | KR | 10-2399454 | B1 | 19 May 2022 |
| | | | | US | 10383080 | B2 | 13 August 2019 |
| | | | | US | 10856252 | B2 | 01 December 2020 |
| | | | | US | 2017-0374638 | A1 | 28 December 2017 |
| | | | | US | 2019-0387491 | A1 | 19 December 2019 |
| | | | | US | 2021-0112516 | A1 | 15 April 2021 |
| | | | | WO | 2016-122761 | A1 | 04 August 2016 |
| WO | 2016-032265 | A1 | 03 March 2016 | US | 2017-0288897 | A1 | 05 October 2017 |
| KR | 10-2020-0039784 | A | 16 April 2020 | CA | 3074882 | A1 | 04 April 2019 |
| | | | | CN | 111165033 | A | 15 May 2020 |
| | | | | EP | 3677076 | A1 | 08 July 2020 |
| | | | | EP | 3677076 | A4 | 28 October 2020 |
| | | | | JP | 2020-535682 | A | 03 December 2020 |
| | | | | JP | 2022-002403 | A | 06 January 2022 |
| | | | | JP | 6950082 | B2 | 13 October 2021 |
| | | | | KR | 10-2022-0032129 | A | 15 March 2022 |
| | | | | KR | 10-2372728 | B1 | 08 March 2022 |
| | | | | US | 11320511 | B2 | 03 May 2022 |
| | | | | US | 2019-0101615 | A1 | 04 April 2019 |
| | | | | WO | 2019-062337 | A1 | 04 April 2019 |
| KR | 10-2020-0105506 | A | 07 September 2020 | CN | 110062457 | A | 26 July 2019 |
| | | | | CN | 110062457 | B | 26 January 2021 |
| | | | | EP | 3742829 | A1 | 25 November 2020 |
| | | | | EP | 3742829 | A4 | 10 March 2021 |
| | | | | JP | 2021-511508 | A | 06 May 2021 |
| | | | | KR | 10-2307426 | B1 | 29 September 2021 |
| | | | | US | 2020-0408871 | A1 | 31 December 2020 |
| | | | | WO | 2019-141090 | A1 | 25 July 2019 |

Form PCT/ISA/210 (patent family annex) (July 2019)